# EUROPÄISCHE PATENTSCHRIFT

(11) **EP 0 426 616 B1**
(45) Veröffentlichungstag und Bekanntmachung des Hinweises auf die Patenterteilung: **15.11.1995**
(21) Anmeldenummer: 90810812.9
(22) Anmeldetag: 23.10.1990
(51) Int. Cl.: C09B 62/085, D06P 1/382

(54) **Reaktivfarbstoffe, deren Herstellung und Verwendung**
Reactive dyes, their preparation and their use
Colorants réactifs, leur préparation et leur emploi

(30) Priorität: 01.11.1989 CH 3939/89
(43) Veröffentlichungstag der Anmeldung: 08.05.1991
(73) Patentinhaber: CIBA-GEIGY AG, 4002 Basel (CH)
(72) Erfinder: Tzikas, Athanassios, Dr., CH-4133 Pratteln (CH); Herzig, Paul, CH-4057 Basel (CH)

(56) Entgegenhaltungen:
- FR-A- 2 436 166
- US-A- 2 945 022
- CHEMICAL ABSTRACTS, Band 101, Nr. 10, September 1984, Seite 84, Zusammenfassung Nr. 74298d, Columbus, Ohio, US; & JP-A-59 08 763 (NIPPON KAYAKU CO., LTD) 18-01-1984

## Beschreibung

Reaktivfarbstoffe werden in grossem Unfange für das Farben und Bedrücken von textilen Fasermaterialien eingesetzt. Obwohl heute eine grosse Anzahl von brauchbaren Reaktivfarbstoffen mit unterschiedlichen Eigenschaften und für verschiedene Anwendungsbereiche zur Verfügung steht, kann der erreichte technische Stand, angesichts der hohen Anforderungen in Bezug auf Eignung für bestimmte Farbeverfahren und Echtheitsniveau der Färbungen, vielfach noch nicht voll befriedigen.

Das gilt auch für Reaktivfarbstoffe, die in Verfahren zum Bedrücken von textilen Fasermaterialien eingesetzt werden. Das vorhandene Angebot an qualitativ hochwertigen Druckfarbstoffen ist, besonders unter Berücksichtigung der Nuance, allgemein noch lückenhaft. So sind aus der FR-A 2 436 166 einige den weiter unten definierten Chlortriazinylverbindungen der Formel (1) analoge Fluortriazinylverbindungen bekannt, doch vermögen diese nicht alle Wünsche bezüglich Applikation und Echtheiten zu erfüllen. Die Bereitstellung weiterer verbesserter Reaktivfarbstoffe ist daher dringend erwünscht.

Die Aufgabe der vorliegenden Erfindung ist es, neue Reaktivfarbstoffe zu finden, die für Färbeverfahren, besonders für Verfahren zum Bedrücken von textilen Fasermaterialien, geeignet sind und die einen hohen Fixiergrad und zugleich eine gute Auswaschbarkeit der nichtfixierten Anteile haben; ferner sollen die Farbstoffe allgemein gute Echtheiten und insbesondere Nuancen im Bereich gelb bis rotstichig gelb besitzen. Es hat sich gezeigt, dass die weiter unten definierten neuen Farbstoffe die gestellte Aufgabe weitgehend erfüllen.

Gegenstand der Erfindung sind daher Reaktivfarbstoffe der Formel 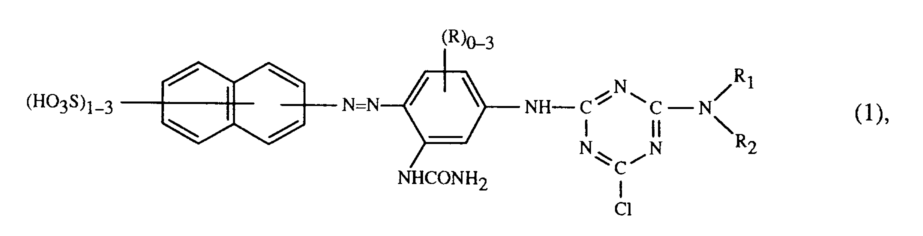
worin (R)₀₋₃ für 0 bis 3 Substituenten R aus der Gruppe Halogen, Nitro, Cyan, Trifluormethyl, Sulfamoyl, Carbamoyl, C₁₋₄-Alkyl, C₁₋₄-Alkoxy, Amino, Acetylamino, Ureido, Hydroxy, Carboxy, Sulfomethyl und Sulfo unabhäbgig voneinander steht, R₁ Wasserstoff, C₁₋₈-Alkyl oder C₅₋₇-Cycloalkyl und R₂ C₁₋₈-Alkyl oder C₅₋₇-Cycloalkyl ist, wobei die Alkyl- und Cycloalkylreste R₁ und R₂ unabhängig voneinander substituiert sein können durch Hydroxy, C₁₋₄-Alkoxy, Hydroxy-C₁₋₄-alkoxy, HO-(CH₂-CH₂-O)₂₋₄-, Sulfato-C₁₋₄-alkoxy, C₂₋₄-Alkanoyl, C₁₋₄-Alkoxy-carbonyl, C₂₋₄-Alkanoyloxy, Carboxy, Cyan, Halogen, C₁₋₄-Alkylamino, N,N-Di-C₁₋₄-alkylamino, oder Sulfato.

Für R kommen in Betracht, als Halogen: Fluor, Chlor und Brom; als C₁₋₄-Alkyl: Methyl, Äthyl, Propyl, Isopropyl, Butyl, Isobutyl, sek.-Butyl und tert.-Butyl; und als C₁₋₄-Alkoxy: Methoxy, Äthoxy, Propyloxy, Isopropyloxy, Butyloxy, Isobutyloxy, sek.-Butyloxy und tert.-Butyloxy.

Für R₁ und R₂ kommen als C₁₋₈-Alkyl z.B. in Betracht: Methyl, Äthyl, Isopropyl, n-Propyl, Isobutyl, n-Butyl, sek.-Butyl, tert.-Butyl, n-Pentyl, n-Hexyl, 2-Methyl-n-hexyl, n-Octyl, wobei diese Reste substituiert sein können wie unter Formel (1) angegeben; wobei als C₁₋₄-Alkoxy z.B. Methoxy, Äthoxy, Isopropoxy, n-Propoxy, sek.-Butoxy, Isobutoxy, tert.-Butoxy und n-Butoxy; als Hydroxy-C₁₋₄-alkoxy, z.B. Hydroxymethoxy, β-Hydroxyäthoxy, β-Hydroxy-n-propoxy und γ-Hydroxypropoxy; als HO-(CH₂CH₂-O)₂₋₄-z.B. HO-CH₂CH₂-O-CH₂CH₂-O-, HO-CH₂CH₂-O-CH₂CH₂-O-CH₂CH₂-O- und HO-CH₂CH₂-O-CH₂CH₂-O-CH₂CH₂-O-CH₂CH₂-O-; als Sulfato-C₁₋₄-alkoxy z.B. β-Sulfatoäthoxy; als C₂₋₄-Alkanoyl z.B. Acetyl, Propionyl und Butyryl; als C₁₋₄-Alkoxycarbonyl z.B. Methoxycarbonyl und Äthoxycarbonyl; als C₂₋₄-Alkanoyloxy z.B. Acetyloxy, Propionyloxy und Butyryloxy; als C₁₋₄-Alkylamino z.B. Methylamino; und als Di-C₁₋₄-alkylamino z.B. N,N-Dimethylamino in Betracht kommen.

Für R₁ und R₂ als C₅₋₇-Cycloalkyl kommen Cyclopentyl-, Cyclohexyl- und Cycloheptyl-Reste in Betracht, die wie für die Alkylreste R₁ und R₂ oben angegeben substituiert sein können.

Bevorzugt sind Reaktivfarbstoffe der Formel 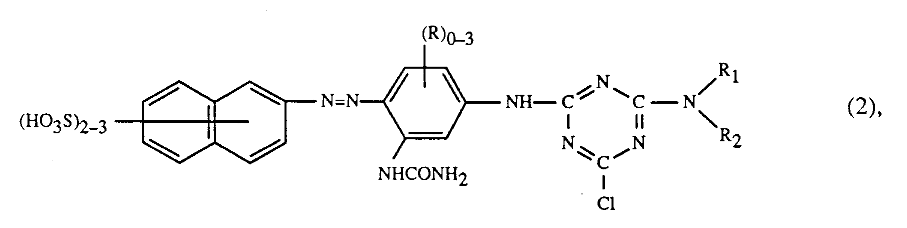
worin (R)₀₋₃, R₁ und R₂ die unter Formel (1) angegebenen Bedeutungen haben, insbesondere worin in Formel (2) der Alkylrest R₁ und R₂ ein C₁₋₆-Alkylrest, vorzugsweise ein C₁₋₄-Alkylrest ist, der wie angegeben substituiert sein kann, und der Cycloalkylrest R₁ und R₂ ein Cyclohexylrest ist, der wie angegeben substituiert sein kann.

Besonders bevorzugt sind Reaktivfarbstoffe der Formel 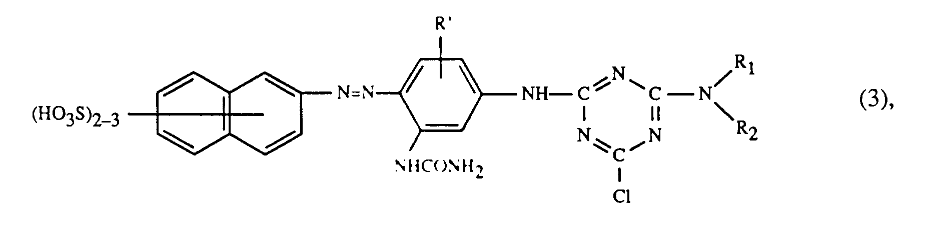
worin R' Wasserstoff, Halogen, insbesondere Chlor, C₁₋₄-Alkoxy, insbesondere Methoxy oder C₁₋₄-Alkyl, insbesondere Methyl ist und R₁ und R₂ die unter Formel (2) angegebenen Bedeutungen haben.

Ganz besonders bevorzugt sind Reaktivfarbstoffe der Formel 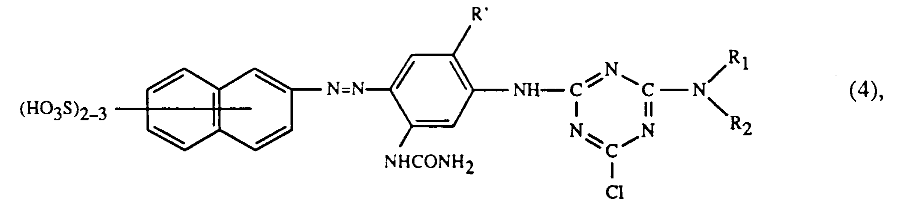
worin R', R₁ und R₂ die unter Formel (3) angegebenen Bedeutungen haben.

Wichtig sind Reaktivfarbstoffe der Formel 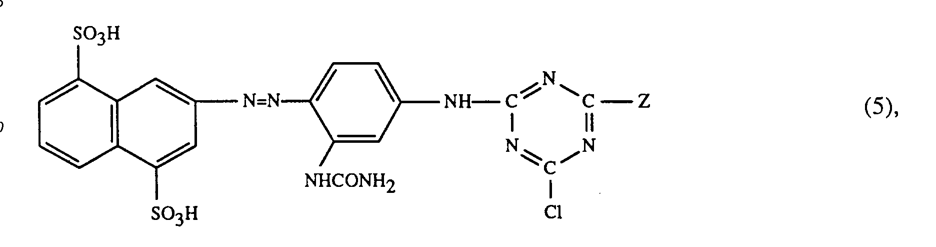
worin Z Hydroxy-C₁₋₄-alkylamino, Sulfato-C₁₋₄-alkylamino, Hydroxy-C₁₋₄-alkoxy-C₁₋₄-alkylamino, Sulfato-C₁₋₄-alkoxy-C₁₋₄-alkylamino, N-C₁₋₄-Alkyl-N-hydroxy-C₁₋₄-alkylamino, N-C₁₋₄-Alkyl-N-sulfato-C₁₋₄-alkylamino, N,N-Di(hydroxy-C₁₋₄-alkyl)-amino, N,N-Di(sulfato-C₁₋₄-alkyl)-amino, -NH-(CH₂CH₂-O)₂₋₄-CH₂CH₂-OH oder N-C₁₋₄-Alkyl-N-(CH₂CH₂-O)₂₋₄-CH₂CH₂-OH ist.

Ebenfalls wichtig sind Reaktivfarbstoffe der Formel 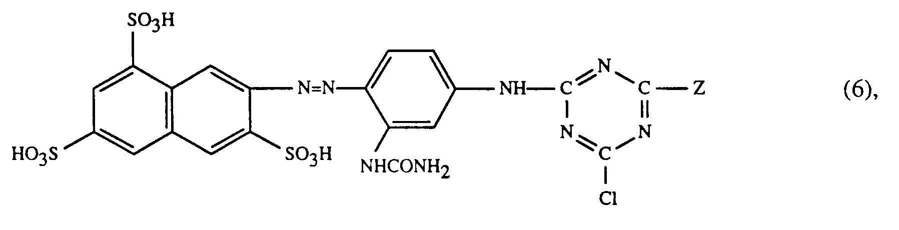
worin Z Hydroxy-C₁₋₄-alkylamino, Sulfato-C₁₋₄-alkylamino, Hydroxy-C₁₋₄-alkoxy-C₁₋₄-alkylamino, Sulfato-C₁₋₄-alkoxy-C₁₋₄-alkylamino, N-C₁₋₄-Alkyl-N-hydroxy-C₁₋₄-alkylamino, N-C₁₋₄-Alkyl-N-sulfato-C₁₋₄-alkylamino, N,N-Di(hydroxy-C₁₋₄-alkyl)-amino, N,N-Di(sulfato-C₁₋₄-alkyl)-amino, -NH-(CH₂CH₂-O)₂₋₄-CH₂CH₂-OH oder -N-C₁₋₄-Alkyl-N-(CH₂CH₂-O)₂₋₄-CH₂CH₂-OH ist.

Besonders wichtig sind Reaktivfarbstoffe der Formeln (5) und (6), worin Z β-Hydroxyäthylamino, β-Sulfatoäthylamino, β-(β'-Hydroxyäthoxy)-äthylamino, β-(β'-Sulfatoäthoxy)-äthylamino, Hydroxymethoxymethylamino, Sulfatomethoxymethylamino, N-Methyl-N-β-hydroxyäthylamino, N-Methyl-N-β-sulfatoäthylamino, N-Äthyl-N-β-hydroxyäthylamino, N-Äthyl-N-β-sulfatoäthylarnino, N,N-Di-(β-hydroxyäthyl)-amino, N,N-Di-(β-sulfatoäthyl)-amino, -NH-(CH₂CH₂-O)₂-CH₂CH₂-OH, -NH-(CH₂CH₂-O)₃-CH₂CH₂-OH, -NH-(CH₂CH₂-O)₄-CH₂CH₂-OH oder N-Methyl-N-β-(β'-hydroxyäthoxy)äthylamino ist.

Interessant sind ferner Reaktivfarbstoffe der Formel (6), worin Z β-Hydroxyäthylamino, β-Sulfatoäthylamino, β-(β'-Hydroxyäthoxy)-äthylamino, N,N-Di-(β-hydroxyäthyl)-amino, Äthylamino, N,N-Diäthylamino, Cyclohexylamino, Carboxymethylamino, N-Methyl-N-carboxymethylatnino, γ-N,N-Dimethylamino-n-propylamino, β-Methoxyäthylamino, ist.

Ganz besonders wichtig ist der Reaktivfarbstoff der Formel 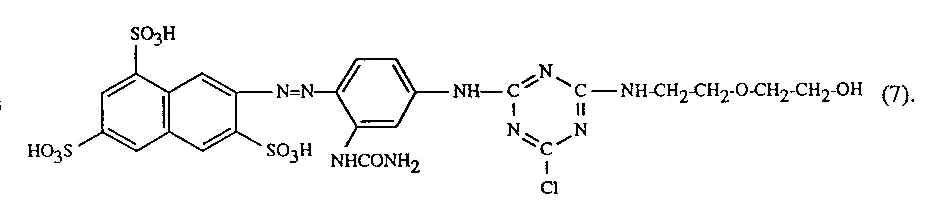
Die Farbstoffe der Formeln (1) bis (7) sind faserreaktiv, da sie im s-Triazinrest ein abspaltbares Chloratom enthalten. Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Das Verfahren zur Herstellung der Reaktivfarbstoffe der Formel (1) ist dadurch gekennzeichnet, dass man eine diazotierte Diazokomponente der Formel 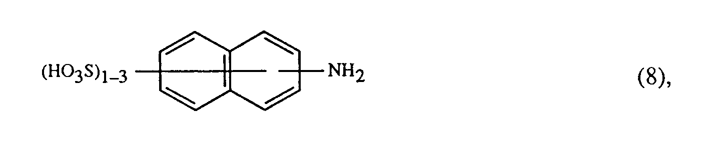
auf eine Kupplungskomponente der Formel 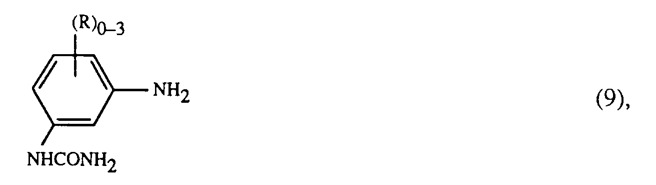
kuppelt und die so erhaltene Aminomonoazo-Verbindung und ein Amin der Formel 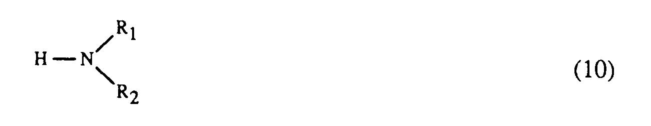
in beliebiger Folge mit 2,4,6-Trichlor-s-triazin kondensiert.

Da die Kondensationen in unterschiedlicher Reihenfolge ausgeführt werden können, sind zwei Verfahrensvarianten möglich.

Die beiden Verfahrensvarianten sind dadurch gekennzeichnet, dass man
1. eine diazotierte Diazokomponente der Formel (8) mit einer Kupplungskomponente der Formel (9) kuppelt, die erhaltene Aminomonoazo-Verbindung mit 2,4,6-Trichlor-s-triazin kondensiert und das primäre Kondensationsprodukt mit einem Amin der Formel (10) kondensiert.
2. 2,4,6-Trichlor-s-triazin zuerst mit einem Amin der Formel (10) kondensiert und das erhaltene primäre Kondensationsprodukt mit der wie in 1. hergestellten Aminomonoazo-Verbindung kondensiert.

Die bevorzugte Herstellungsweise des Reaktivfarbstoffes der Formel (7) ist dadurch gekennzeichnet, dass man eine Monoazoverbindung der Formel 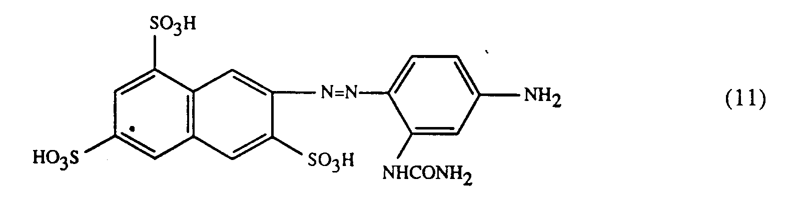
herstellt, diese mit 2,4,6-Trichlor-s-triazin kondensiert, und die erhaltene Dichlorrriazin-Azoverbindung der Formel 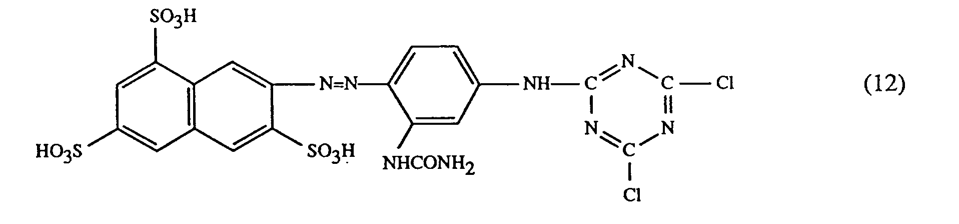
mit β-(β'-Hydroxyäthoxy)-äthylamin kondensiert.

Als Ausgangsverbindungen zur Herstellung der Reaktivfarbstoffe der Formel (1) können beispielsweise die folgenden genannt werden:
(a) Diazokomponenten der Formel (8):
   1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure.
(b) Kupplungskomponenten der Formel (9):
   3-Aminophenylharnstoff, 1-Amino-3-ureido-6-methylbenzol, 1-Amino-3-ureido-6-methoxybenzol, 1-Amino-3-ureido-6-äthoxybenzol, 1-Amino-3-ureido-6-äthylbenzol, 1-Amino-3-ureido-6-chlorbenzol, 1-Amino-3-ureido-6-trifluormethylbenzol und 1-Amino-3-ureido-6-sulfobenzol.
(c) 2,4,6-Trichlor-s-triazin (Cyanurchlorid).
(d) Amin der Formel (10):
   Äthanolamin, β-Sulfatoäthylamin, β-(β'-Hydroxyäthoxy)-äthylamin, Bis-β-hydroxyäthylamin, Äthylamin, N,N-Diäthylamin, Cyclohexylamin, Carboxymethylamin, N-Methyl-N-carboxymethylamin, γ-N,N-Dimethylamino-n-propylamin, β-Methoxyäthylamin, N-Methyl-N-β-Hydroxyäthylamin, N-Aethyl-N-β-hydroxyäthylamin, H₂N-CH₂CH₂-O-CH₂CH₂-O-CH₂CH₂-OH, H₂N-(CH₂CH₂-O)₃-CH₂CH₂-OH, H₂N-(CH₂CH₂-O)₄-CH₂CH₂-OH, β-Hydroxyäthylamin, N-Methyl-N-β-(β'-hydroxyäthoxy)-äthylamin.

Die Diazotierung der Diazokomponenten erfolgt in der Regel durch Einwirkung salpetriger Säure in wässrig-mineralsaurer Lösung bei tiefer Temperatur, die Kupplung auf die Kupplungskomponenten bei schwach sauren, neutralen bis schwach alkalischen pH-Werten.

Die Kondensationen des 2,4,6-Trichlor-s-triazins mit den Aminomonoazoverbindungen und den Aminoverbindungen der Formel (10) erfolgen vorzugsweise in wässriger Lösung oder Suspension, bei niedriger Temperatur und bei schwach saurem, neutralem bis schwach alkalischem pH-Wert, so dass im fertigen Reaktivfarbstoff der Formel (1) noch mindestens ein Chloratom als abspaltbarer Rest übrig bleibt. Vorteilhaft wird der bei der Kondensation freiwerdende Chlorwasserstoff laufend durch Zugabe wässriger Alkalihydroxide, -carbonate oder -bicarbonate neutralisiert. Auf eine Isolierung der Dichlortriazin-Azoverbindung wird im allgemeinen verzichtet.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten und gegebenenfalls entsalzten Farbstoffe können gegebenenfalls nach Zugabe von Coupagemitteln und/oder Puffermitteln, z.B. nach Zugabe eines Gemisches gleicher Teile Mono- und Dinatriumphosphat oder Natriumtripolyphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fallen die erfindungsgemässen trockenen Präparate direkt, d.h. ohne Zwischenisolierung der Farbstoffe herstellen.

Gegenstand der Erfindung sind ferner lagerstabile, konzentrierte flüssige Farbstoffpräparationen der Reaktivfarbstoffe der Formel (1) sowie ihre Verwendung zur Herstellung von Klotzflotten, Färbebädem und vor allem Druckpasten, die zum Färben und Bedrücken von Fasermaterialien, insbesondere cellulosehaltigen Fasermaterialien verwendet werden.

Flüssige Farbstoffpräparationen haben Vorteile gegenüber der Pulverform, z.B. keine Staubentwicklung beim Ansetzen von Druckpasten sowie von Klotz- und Färbeflotten, keine Benetzungsprobleme durch Klumpenbildung , keine fleckigen Färbungen durch ungelöste Farbstoffpartikel. Solche flüssige Formulierungen sollten hoch konzentriert (mindestens 10 Gew.-% und vorzugsweise mehr als 15 Gew.-% Farbstoffgehalt) und mindestens über mehrere Monate in einem breiten Temperaturbereich (-10 bis +40°C) unverändert haltbar sein. Insbesondere enthalten die flüssigen Formulierungen 20 bis 50, vorzugsweise 35 bis 50, Gewichtsprozent Farbstoff.

Als Ausgangslösung bzw. -suspension zur Herstellung der Farbstoffpräparationen kann man die direkt aus der Synthese erhaltene wässrige, gegebenenfalls Lösungsmittel enthaltende Lösung bzw. Suspension oder eine wässrige Anschlämmung der feuchten Press- oder Filterkuchen der Rohfarbstoffe von unterschiedlichem Gehalt an unerwünschten gelösten Stoffen mit niedrigem Molekulargewicht, besonders von bei der Synthese des Farbstoffes anfallenden Nebenprodukten und gelösten anorganischen und organischen Salzen verwenden. In Fällen, in denen das Kondensationsprodukt nicht oder nur äusserst mühsam aussalzbar ist, kann auch direkt die rohe Kondensations- bzw. Neutralisationslösung verwendet werden. Vorteilhaft verwendet man Ausgangslösungen bzw. -suspensionen, die 2 bis 50 % Farbstoff enthalten.

Man kann aber auch von dem trockenen Rohfarbstoffpulver ausgehen, wenn man es zunächst mit Wasser anschlämmt.

Bei den erfindungsgemässen, konzentrierten flüssigen Präparationen handelt es sich in der Regel um echte oder kolloidale Lösungen. Sie sind dünnflüssig (Viskosität von etwa 5 bis 300 cp/20°C) und gut lagerstabil, d.h. sie bleiben mindestens meltrere Monate bei Temperaturen von -20 bis +60°C, insbesondere -10 bis +40°C in gebrauchsfähigem Zustand. Diese Präparationen können bei der Herstellung von Klotzflotten, Färbebädern und Druckpasten sowohl mit Wasser als auch mit organischen Lösungsmitteln und/oder Verdickungsmittel versetzt werden, ohne dass der Farbstoff ausfällt oder dass es zu anderen Inhomogenitäten kommt. Mit den genannten Klotzflotten, Färbebädem und Druckpasten kann man z.B. Textilmaterialien aus natürlichen oder synthetischen, insbesondere cellulose-haltigen Fasermaterialien in bekannter Weise färben oder bedrücken.

Besonders geeignet sind die erfindungsgemässen stabilen konzentrierten flüssigen Farbstoffpräparationen zur Herstellung von Druckpasten für das Bedrücken von Cellulose-Fasermaterialien sowie für kontinuierliche Färbeverfahren..

Ein Verfahren zur Herstellung einer erfindungsgemässen flüssigen Präparation ist z.B. aus der EP-A-0 333 656 bekannt, worin auf einer Anlage für Umkehr-Osmose die Farbstofflösung entsalzt und aufkonzentriert wird.

Die Anwendung membrangebundener Filtriertechniken zur Herstellung von Zubereitungen wasserlöslicher organischer Farbstoffe ist bekannt. Das Verfahren geht von den wässrigen Suspensionen des Rohfarbstoffs aus, die mit Hilfe eines ersten Membrantrennverfahrens weitgehend von in Wasser löslichen Nebenprodukten befreit und deren Salzgehalt auf etwa die Hälfte verringert werden; dann folgt ein zweites Membrantrennverfahren.

In diesem ersten Membrantrennverfahren permeieren also die löslichen Nebenprodukte und ein Teil der Salze durch ein Membran, während der Farbstoff und in Wasser unlösliche Anteile zurückgehalten werden.

In dem zweiten Membrantrennverfahren wird dann die Farbstoffsuspension - gegebenenfalls nach einer Verdünnung mit Wasser - entsalzt und aufkonzentriert und schliesslich in eine verkaufsfertige flüssige oder feste Farbstoffzubereitung übergeführt.

Die erfindungsgemäss eingesetzten Farbstofflösungen haben in der Regel einen Farbstoffgehalt von 5 bis 20 Gew.-% und einen Salzgehalt (anorganische Salze) von 1 bis 20 Gew.-%, insbesondere 1 bis 10 Gew.-%. Der pH-Wert liegt in der Regel im Bereich von 3 bis 10, vorzugsweise 3 bis 9. Unlösliche Anteile werden durch Mikrofiltration abgetrennt, die Aufkonzentrierung und Entsalzung wird so lange durchgeführt, bis ein Farbstoffgehalt von 10 bis 50 Gew.-% erreicht ist. Der Salzgehalt sinkt dabei unter 5 Gew.-%, z.B. 0,05 bis 5 Gew.-%, und vorzugsweise unter 1 Gew.-%, z.B. 0,05 bis 1 Gew.-%.

Zur Herstellung einer handelsfertigen Flüssigform ist die konzentrierte wässrige Farbstoffzubereitung gegebenenfalls nach Zugabe von den für Flüssigformulierungen üblichen Komponenten, wie Lösungsvermittlern, schaumdämpfenden Mitteln, Gefrierschutzmitteln, Feuchthaltemitteln, Tensiden, Puffersubstanzen und/oder Antimikrobika und Einstellen des pH-Wertes, nur noch durch Verdünnen und/oder mit Hilfe von Coupagemitteln auf einen vorgegebenen Endfarbstoffgehalt zu bringen. Die Farbstoffzubereitung kann aber auch, gegebenenfalls nach Zugabe von Zusätzen, wie Bindemitteln, Entstäubungsmitteln, Netzmitteln, Puffersubstanzen, wie Alkalipolyphosphaten, Dinatriumhydrogenphosphat, Zitronensäure und/oder Ethylendiamintetraessigsäure, und/oder Coupagemitteln, durch Wasserentzug, in ein festes Farbstoffpräparat übergeführt werden. Dank der erhöhten Farbstoffkonzentration benötigt man weniger Energie zum Trocknen. Man verwendet übliche Trocknungsverfahren, insbesondere die Sprühtrocknung.

Der pH-Wert der handelsfertigen Flüssigformulierung der Reaktivfarbstoffe wird in der Regel durch Zugabe von Puffersubstanzen eingestellt. Der pH-Wert liegt etwa im Bereich 7,0 bis 8,5, vorzugsweise 8,0.

Die genannten Hilfs- oder Zusatzmittel können der Farbstofflösung natürlich nicht nur vor deren endgültiger Formulierung als Handelsform zugesetzt, sondern bereits vor oder während des erfindungsgemässen Verfahrens in die Lösung des Rohfarbstoffs eingebracht werden und sind damit wenigstens teilweise bereits in der Farbstofflösung, aus der die endgültige handelsfertige Farbstoffformulierung hergestellt wird, vorhanden (z.B. Lösungsvermittler, Lösungsmittel, Tenside etc.). Eine Zugabe während des Verfahrens ist selbstverständlich nur dann sinnvoll, wenn das oder die Hilfs- oder Zusatzmittel nicht durch eines der Membrantrennverfahren wieder vollständig aus der Lösung entfernt werden.

Die erfindungsgemässen, konzentrierten flüssigen Präparationen der Reaktivfarbstoffe der Formel (1) enthalten somit 10 bis 50 Gewichtsprozent Farbstoff, 0,05 bis 5 Gewichtsprozent eines anorganischen Salzes, z.B. NaCl, KCl, LiCl, soviel Puffersubstanzen, z.B. Mono- und Dinatriumphosphat oder Natriumtripolyphosphat oder Mischungen von Puffersubstanzen, so dass ein pH-Wert zwischen 7,0 und 8,5 eingestellt werden kann, sowie Wasser.

Die Reaktivfarbstoffe der Formel (1) zeichnen sich durch hohe Reaktivität aus, und sie ergeben Färbungen mit guten Nass- und Lichtechtheiten. Besonders hervorzuheben ist es, dass die Farbstoffe eine gute Löslichkeit und hohe Farbstoff-Fixierung aufweisen, dass sie gut in der Cellulosefaser diffundieren, und dass sich die nichtfixierten Anteile leicht entfernen lassen.

Die Reaktivfarbstoffe der Formel (1) eignen sich zum Färben und Bedrücken der verschiedensten Materialien, wie Seide, Leder, Wolle, Polyamidfasern und Polyurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung, fixiert werden.

Sie eignen sich vor allem zum Bedrücken von textilen cellulosehaltigen Fasermaterialien, insbesondere Baumwolle, ebenso aber auch zum Bedrücken von stickstoffhaltigen Fasern, z.B. von Wolle, Seide oder Wolle enthaltenden Mischgeweben.

Insbesondere zeichnen sich die erfindungsgemässen Farbstoffe durch eine sehr gute Kombinierbarkeit aus; die erhaltenen Drucke zeichnen sich dadurch aus, dass in Kombination mit anderen Farbstoffen, z.B. in Kombination mit einem blaufärbenden Farbstoff, keine Zweiseitigkeit auftritt, d.h. der erhaltene Druck ist nuancenkonstant.

Es empfiehlt sich, die Färbungen und Drucke einem gründlichen Spülen mit kaltem und heissem Wasser, gegebenenfalls unter Zusatz eines dispergierend wirkenden und die Diffusion der nichtfixierten Anteile fördernden Mittels, zu unterwerfen.

Bei der Anwendung in der Praxis werden die erfindungsgemässen Farbstoffe vorteilhaft als flüssige Färbe- oder Druckpräparate eingesetzt.

Die Herstellung der Monoazozwischenverbinungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile.

Beispiel 1: 585 Teile 7-[4-(4,6-Dichlor-1,3,5-triazin-2-yl-amino)-2-ureidophenyl-azo]-1,3,6-naphthalin-trisulfonsäure, hergestellt nach bekanntem Verfahren, werden in 5000 Teilen Wasser bei 8°C und pH 4,5 durch Zugabe von Natriumhydroxidlösung gelöst. Eine Mischung von 79 Teilen Äthanolamin mit 70 Teilen Wasser wird so zugetropft, dass der pH nicht über 7,5 steigt. Die Temperatur steigt dabei auf etwa 20°C. Danach wird für 2 Stunden auf etwa 40°C erwärmt, wobei der pH durch Zugabe von 195 Teilen 5n Natriumhydroxidlösung konstant gehalten wird. Der gelöste Farbstoff der Formel 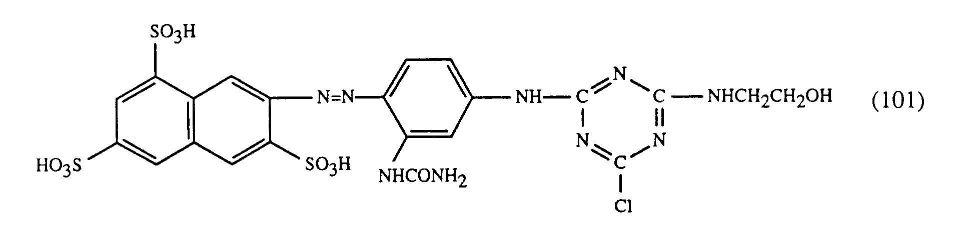
wird durch Zugabe von 550 Teilen Natriumchlorid ausgefällt und isoliert.

Man erhält - nach üblichem Verfahren auf Baumwolle appliziert - sehr echte goldgelbe Drucke oder Färbungen.

Beispiel 2: Zu einer Suspension von 184 Teilen Cyanurchlorid in 1000 Volumteilen Wasser werden bei 0 bis 5°C 67 Teile Äthanolamin so zugetropft, dass der pH-Wert bei 5,0 gehalten wird. Danach wird der pH-Wert weiter durch Zugabe von 100 Volumteilen 10n-Natronlauge auf 5,0 bis 5,5 gehalten. Inzwischen werden 546 Teile 7-(4-Amino-2-ureidophenyl-azo)-naphthalin-1,3,6-trisulfonsäure, hergestellt nach bekanntem Verfahren, in 4000 Volumteilen Wasser neutral gelöst. Diese Lösung wird zu der Lösung des oben hergestellten Kondensationsproduktes zulaufen gelassen. Die Reaktionsmischung wird nun für 2 bis 3 Stunden auf 40 bis 45°C erwärmt, und gleichzeitig wird der pH-Wert durch Zutropfen von 110 Volumteilen 10n-Natronlauge auf 7,5 gehalten. Aus der so entstandenen Farbstofflösung lässt sich durch Zugabe von 500 Teilen Natriumchlorid der gleiche Farbstoff isolieren, der in Beispiel 1 erhalten wird.

Wenn man nach den Angaben von Beispiel 1 oder 2 verfährt, jedoch für den Austausch des zweiten Chloratoms am Triazinring die in der zweiten Spalte angegebenen Amine verwendet, so erhält man gleichfalls wertvolle Farbstoffe, die Baumwolle in gelben bis rotstichig gelben Tönen färben.

| Beispiel Nr. | Amin | Farbton |
|---|---|---|
| 3 | β-Sulfatoäthylamin | gelb |
| 4 | β-(β'-Hydroxyäthoxy)-äthylamin | gelb |
| 5 | Bis-β-hydroxyäthylamin | gelb |
| 6 | Äthylamin | gelb |
| 7 | N,N-Diäthylamin | gelb |
| 8 | Cyclohexylamin | gelb |
| 9 | Carboxymethylamin | gelb |
| 10 | N-Methyl-carboxy-methylamin | gelb |
| 11 | γ-N,N-Dimethylamino-n-propylamin | gelb |
| 12 | β-Methoxy-äthylamin | gelb |
| 13 | N-Methyl-N-β-hydroxyäthylamin | gelb |
| 14 | N-Aethyl-N-β-hydroxyäthylamin | gelb |
| 15 | H₂N-(CH₂CH₂-O)₂-CH₂CH₂-OH | gelb |
| 16 | H₂N-(CH₂CH₂-O)₃-CH₂CH₂-OH | gelb |
| 17 | H₂N-(CH₂CH₂-O)₄-CH₂CH₂-OH | gelb |

Wenn man nach den Angaben von Beispiel 1 oder 2 verfährt, jedoch als Chromophor eine äquimolare Menge 7-[4-(4,6-Dichlor-1,3,5-triazin-2-yl-amino)-2-ureidophenyl-azo]-1,5-naphthalin-disulfonsäure verwendet, und für den Austausch des zweiten Chloratoms am Triazinring die in der zweiten Spalte angegebenen Amine verwendet, so erhält man gleichfalls wertvolle Farbstoffe, die Baumwolle in gelben bis rotstichig gelben Tönen färben.

| Beispiel Nr. | Amin | Farbton |
|---|---|---|
| 18 | β-Hydroxyäthylamin | gelb |
| 19 | β-Sulfatoäthylamin | gelb |
| 20 | β-(β'-Hydroxyäthoxy)-äthylamin | gelb |
| 21 | Bis-β-hydroxyäthylamin | gelb |
| 22 | Äthylamin | gelb |
| 23 | N,N-Diäthylamin | gelb |
| 24 | Cyclohexylamin | gelb |
| 25 | Carboxymethylamin | gelb |
| 26 | N-Methyl-carboxy-methylamin | gelb |
| 27 | γ-N,N-Dimethylamino-n-propylamin | gelb |
| 28 | β-Methoxy-äthylamin | gelb |
| 29 | N-Methyl-N-β-hydroxyäthylamin | gelb |
| 30 | N-Aethyl-N-β-hydroxyäthylamin | gelb |
| 31 | H₂N-(CH₂CH₂-O)₂-CH₂CH₂-OH | gelb |
| 32 | H₂N-(CH₂CH₂-O)₃-CH₂CH₂-OH | gelb |
| 33 | H₂N-(CH₂CH₂-O)₄-CH₂CH₂-OH | gelb |

Wenn man nach den Angaben von Beispiel 1 oder 2 verfährt, jedoch als Chromophor eine äquimolare Menge 7-[4-(4,6-Dichlor-1,3,5-triazin-2-yl-amino)-2-ureidophenyl-azo]-1,3,5-naphthalin-trisulfonsäure verwendet, und für den Austausch des zweiten Chloratoms am Triazinring die in der zweiten Spalte angegebenen Amine verwendet, so erhält man gleichfalls wertvolle Farbstoffe, die Baumwolle in gelben bis rotstichig gelben Tönen färben.

| Beispiel Nr. | Amin | Farbton |
|---|---|---|
| 34 | β-Hydroxyäthylamin | gelb |
| 35 | β-Sulfatoäthylamin | gelb |
| 36 | β-(β'-Hydroxyäthoxy)-äthylamin | gelb |
| 37 | Bis-β-hydroxyäthylamin | gelb |
| 38 | Äthylamin | gelb |
| 39 | N,N-Diäthylamin | gelb |
| 40 | Cyclohexylamin | gelb |
| 41 | Carboxymethylamin | gelb |
| 42 | N-Methyl-carboxy-methylamin | gelb |
| 43 | γ-N,N-Dimethylamino-n-propylamin | gelb |
| 44 | β-Methoxy-äthylamin | gelb |
| 45 | N-Methyl-N-β-hydroxyäthylamin | gelb |
| 46 | N-Aethyl-N-β-hydroxyäthylamin | gelb |
| 47 | H₂N-(CH₂CH₂-O)₂-CH₂CH₂-OH | gelb |
| 48 | H₂N-(CH₂CH₂-O)₃-CH₂CH₂-OH | gelb |
| 49 | H₂N-(CH₂CH₂-O)₄-CH₂CH₂-OH | gelb |

### Färbevorschrift 1

2 Teile des gemäss Beispiel 1 erhaltenen Farbstoffes werden unter Zusatz von 5 bis 20 Teilen Harnstoff und 2 Teilen wasserfreiem Na₂CO₃ in 100 Teilen Wasser bei 20 bis 50°C gelöst. Mit der erhaltenen Lösung wird ein Baumwollgewebe imprägniert, so dass es um 60 bis 80 % seines Gewichtes zunimmt, und dann getrocknet. Danach wird während 1½ bis 5 Minuten bei 140 bis 210°C thermofixiert, dann während einer Viertelstunde in einer 0,1 %igen Lösung eines ionenfreien Waschmittels bei Siedetemperatur geseift, gespült und getrocknet.

### Färbevorschrift 2

2 Teile des gemäss Beispiel 1 erhaltenen Farbstoffes werden in 2000 Teilen Wasser unter Zusatz von 120 Teilen NaCl oder wasserfreiem Na₂SO₄ bei 75°C gelöst. Man geht mit 100 Teilen eines Baumwollgewebes in dieses Färbebad ein und hält die Temperatur während 30 bis 60 Minuten konstant. Danach werden 10 Teile wasserfreies Na₂CO₃ und 4 ml 30 %-ige Natronlauge zugegeben. Die Temperatur wird weitere 45 bis 60 Minuten bei 75 bis 80°C gehalten, dann wird während 15 Minuten in einer 0,1 %igen Lösung eines ionenfreien Waschmittels bei Siedetemperatur geseift, gespült und getrocknet.

### Färbevorschrift 3

2 Teile des gemäss Beispiel 1 erhaltenen Farbstoffes werden unter Zusatz von 0,5 Teilen m-nitrobenzolsulfonsaurem Natrium in 100 Teile Wasser gelöst. Mit der erhaltenen Lösung wird ein Baumwollgewebe imprägniert, so dass es um 75 % seines Gewichtes zunimmt, und dann getrocknet. Danach imprägniert man das Gewebe mit einer 20°C warmen Lösung, die pro Liter 5 g Natriumhydroxid und 300 g Natriumchlorid enthält, quetscht auf 75 % Gewichtszunahme ab, dämpft die Färbung während 30 Sekunden bei 100 bis 101°C, spült, seift während einer Viertelstunde in einer 0,3 %igen Lösung eines ionenfreien Waschmittels bei Siedetemperatur, spült und trocknet.

### Färbevorschrift 4

2 Teile des gemäss Beispiel 1 erhaltenen Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein. Man steigert die Temperatur auf 60°C, wobei nach 30 Minuten 40 Teile wasserfreies Na₂CO₃ und nochmals 60 Teile Natriumchlorid zugegeben werden. Man hält die Temperatur 30 Minuten auf 60°C, spült und seift dann die Färbung während 15 Minuten in einer 0,3 %igen Lösung eines ionenfreien Waschmittels bei Siedetemperatur, spült und trocknet.

### Druckvorschrift

2 Teile des gemäss Beispiel 1 hergestellten Farbstoffes werden unter schnellem Rühren in 100 Teile einer Stammverdickung, enthaltend 45 Teile 5 %ige Natriumalginatverdickung, 32 Teile Wasser, 20 Teile Harnstoff, 1 Teil m-nitrobenzolsulfonsaures Natrium sowie 2 Teile Natriumcarbonat, eingestreut. Mit der so erhaltenen Druckpaste bedrückt man ein Baumwollgewebe auf einer Rouleauxdrückmaschine und dämpft den erhaltenen bedrückten Stoff 4 bis 8 Minuten bei 100°C in gesättigtem Dampf. Das bedrückte Gewebe wird dann in kaltem und heissem Wasser gründlich gespült, wobei sich die nicht chemisch fixierten Anteile sehr leicht von der Faser entfernen lassen, und anschliessend getrocknet.

## Patentansprüche (Patentansprüche für folgende(n) Vertragsstaat(en): BE, CH, DE, FR, GB, LI, IT)

1. Reaktivfarbstoffe der Formel 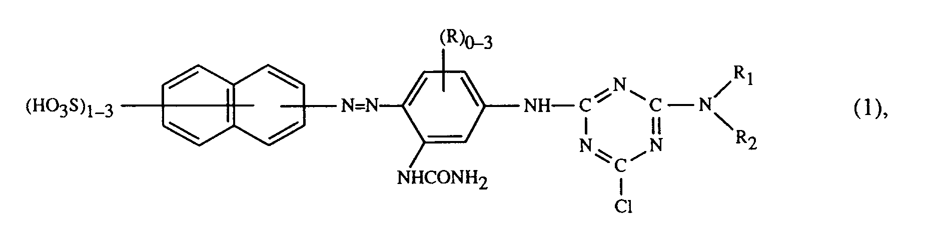 worin (R)₀₋₃ für 0 bis 3 Substituenten R aus der Gruppe Halogen, Nitro, Cyan, Trifluormethyl, Sulfamoyl, Carbamoyl, C₁₋₄-Alkyl, C₁₋₄-Alkoxy, Amino, Acetylamino, Ureido, Hydroxy, Carboxy, Sulfomethyl und Sulfo unabhängig voneinander steht, R₁ Wasserstoff, C₁₋₈-Alkyl oder C₅₋₇-Cycloalkyl und R₂ C₁₋₈-Alkyl oder C₅₋₇-Cycloalkyl ist, wobei die Alkyl- und Cycloalkylreste R₁ und R₂ unabhängig voneinander substituiert sein können durch Hydroxy, C₁₋₄-Alkoxy, Hydroxy-C₁₋₄-alkoxy, HO-(CH₂CH₂-O)₂₋₄-, Sulfato-C₁₋₄-alkoxy, C₂₋₄-Alkanoyl, C₁₋₄-Alkoxy-carbonyl, C₂₋₄-Alkanoyloxy, Carboxy, Cyan, Halogen, C₁₋₄-Alkylamino, N,N-Di-C₁₋₄-alkylamino, oder Sulfato.

2. Reaktivfarbstoffe gemäss Anspruch 1 der Formel 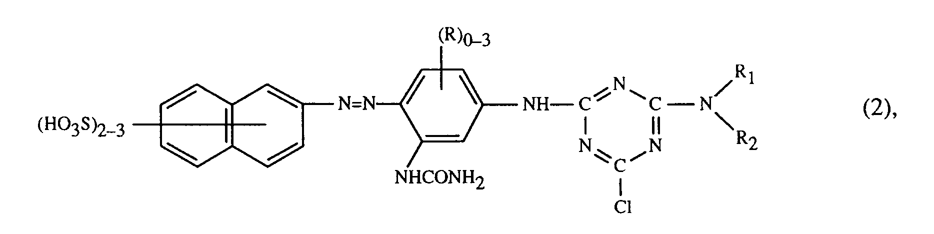 worin (R)₀₋₃, R₁ und R₂ die in Anspruch 1 angegebenen Bedeutungen haben.

3. Reaktivfarbstoffe gemäss einem der Ansprüche 1 und 2, worin der Alkylrest R₁ und R₂ ein C₁₋₆-Alkylrest, insbesondere ein C₁₋₄-Alkylrest ist, der wie angegeben substituiert sein kann, und der Cycloalkylrest R₁ und R₂ ein Cyclohexylrest ist, der wie angegeben substituiert sein kann.

4. Reaktivfarbstoffe gemäss einem der Ansprüche 2 und 3, der Formel 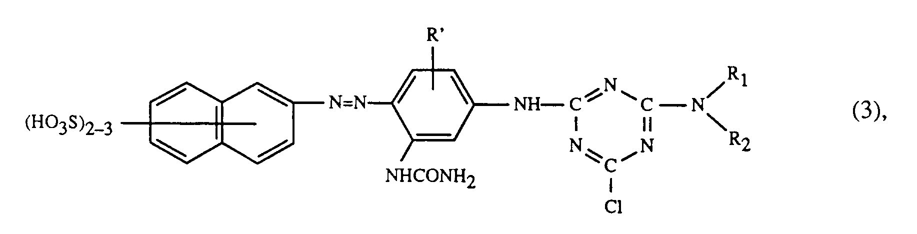 worin R' Wasserstoff, Halogen, C₁₋₄-Alkoxy oder C₁₋₄-Alkyl ist und R₁ und R₂ die in Anspruch 3 angegebenen Bedeutungen haben.

5. Reaktivfarbstoffe gemäss Anspruch 4, der Formel 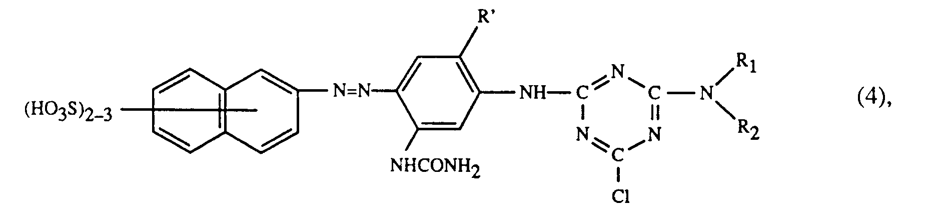 worin R', R₁ und R₂ die in Anspruch 4 angegebenen Bedeutungen haben.

6. Reaktivfarbstoffe gemäss Anspruch 5, der Formel 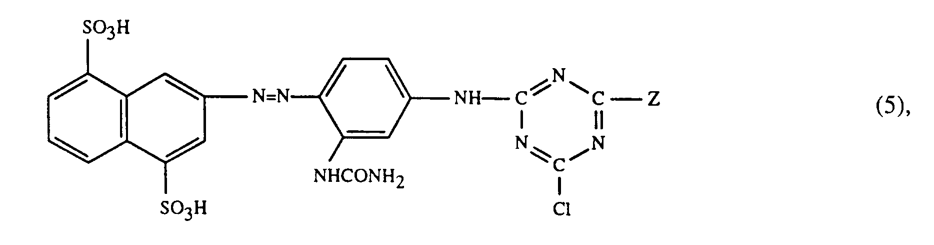 worin Z Hydroxy-C₁₋₄-alkylamino, Sulfato-C₁₋₄-alkylamino, Hydroxy-C₁₋₄-alkoxy-C₁₋₄-alkylamino, Sulfato-C₁₋₄-alkoxy-C₁₋₄-alkylamino, N-C₁₋₄-Alkyl-N-hydroxy-C₁₋₄-alkylamino, N-C₁₋₄-Alkyl-N-sulfato-C₁₋₄-alkylamino, N,N-Di(hydroxy-C₁₋₄-alkyl)-amino, N,N-Di(sulfato-C₁₋₄-alkyl)-amino, -NH-(CH₂CH₂-O)₂₋₄-CH₂CH₂-OH oder N-C₁₋₄-Alkyl-N-(CH₂CH₂-O)₂₋₄-CH₂CH₂-OH ist.

7. Reaktivfarbstoffe gemäss Anspruch 5, der Formel 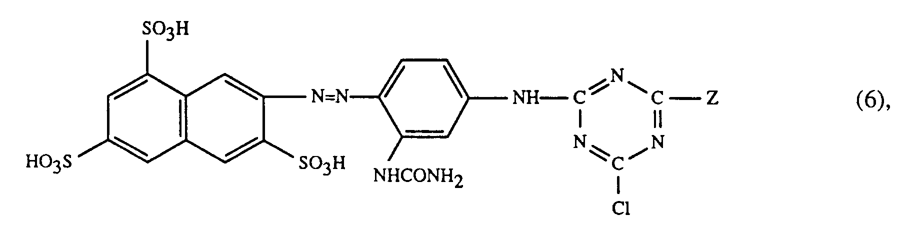 worin Z Hydroxy-C₁₋₄-alkylamino, Sulfato-C₁₋₄-alkylamino, Hydroxy-C₁₋₄-alkoxy-C₁₋₄-alkylamino, Sulfato-C₁₋₄-alkoxy-C₁₋₄-alkylamino, N-C₁₋₄-Alkyl-N-hydroxy-C₁₋₄-alkylamino, N-C₁₋₄-Alkyl-N-sulfato-C₁₋₄-alkylamino, N,N-Di(hydroxy-C₁₋₄-alkyl)-amino, N,N-Di(sulfato-C₁₋₄-alkyl)-amino, -NH-(CH₂CH₂-O)₂₋₄-CH₂CH₂-OH oder -N-C₁₋₄-Alkyl-N-(CH₂CH₂-O)₂₋₄-CH₂CH₂-OH ist.

8. Reaktivfarbstoffe gemäss einem der Ansprüche 6 und 7, worin Z β-Hydroxyäthylamino, β-Sulfatoäthylamino, β-(β'-Hydroxyäthoxy)-äthylamino, β-(β'-Sulfatoäthoxy)äthylamino, Hydroxymethoxymethylamino, Sulfatomethoxymethylamino, N-Methyl-N-β-hydroxyäthylamino, N-Methyl-N-β-sulfatoäthylamino, N-Äthyl-N-β-hydroxyäthylamino, N-Äthyl-N-β-sulfatoäthylamino, N,N-Di-(β-hydroxyäthyl)-amino, N,N-Di-(β-sulfatoäthyl)-amino, -NH-(CH₂CH₂-O)₂-CH₂CH₂-OH, -NH-(CH₂CH₂-O)₃-CH₂CH₂-OH, -NH-(CH₂CH₂-O)₄-CH₂CH₂-OH oder N-Methyl-N-β-(β'-hydroxyäthoxy)-äthylamino ist.

9. Der Reaktivfarbstoff gemäss Anspruch 8, der Formel

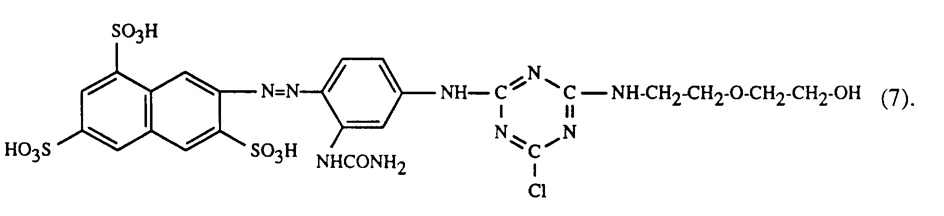

10. Verfahren zur Herstellung von Reaktivfarbstoffen der Formel (1) gemäss Anspruch 1, dadurch gekennzeichnet, dass man eine diazotierte Diazokomponente der Formel 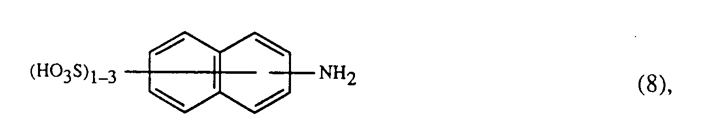 auf eine Kupplungskomponente der Formel 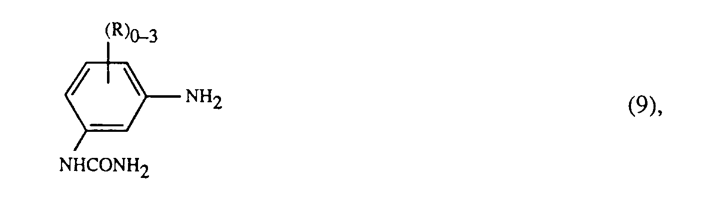 kuppelt und die so erhaltene Aminomonoazo-Verbindung und ein Amin der Formel 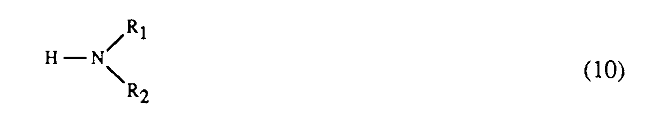 in beliebiger Folge mit 2,4,6-Trichlor-s-triazin kondensiert, wobei (R)₀₋₃, R₁ und R₂ die in Anspruch 1 angegebenen Bedeutungen haben.

11. Verwendung der Reaktivfarbstoffe gemäss Anspruch 1 zum Färben oder Bedrücken von textilen Fasermaterialien.

12. Verwendung gemäss Anspruch 11, zum Färben oder Bedrücken von Baumwolle.

13. Lagerstabile konzentrierte flüssige Farbstoffpräparationen von wasserlöslichen faserreaktiven Farbstoffen gemäss Anspruch 1.

## Patentansprüche (Patentansprüche für folgende(n) Vertragsstaat(en): ES)

1. Verfahren zur Herstellung von Reaktivfarbstoffen der Formel 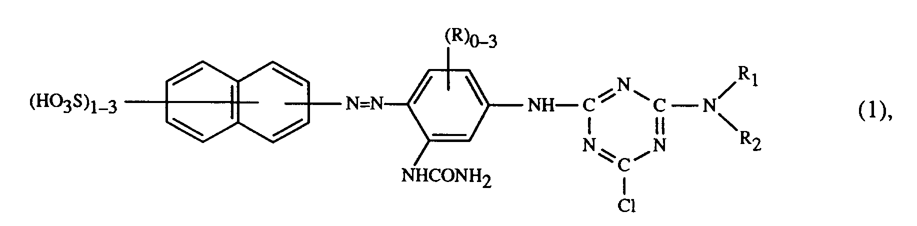 worin (R)₀₋₃ für 0 bis 3 Substituenten R aus der Gruppe Halogen, Nitro, Cyan, Trifluormethyl, Sulfamoyl, Carbamoyl, C₁₋₄-Alkyl, C₁₋₄-Alkoxy, Amino, Acetylamino, Ureido, Hydroxy, Carboxy, Sulfomethyl und Sulfo unabhäbgig voneinander steht, R₁ Wasserstoff, C₁₋₈-Alkyl oder C₅₋₇-Cycloalkyl und R₂ C₁₋₈-Alkyl oder C₅₋₇-Cycloalkyl ist, wobei die Alkyl- und Cycloalkylreste R₁ und R₂ unabhängig voneinander substituiert sein können durch Hydroxy, C₁₋₄-Alkoxy, Hydroxy-C₁₋₄-alkoxy, HO-(CH₂CH₂-O)₂₋₄-, Sulfato-C₁₋₄-alkoxy, C₂₋₄-Alkanoyl, C₁₋₄-Alkoxy-carbonyl, C₂₋₄-Alkanoyloxy, Carboxy, Cyan, Halogen, C₁₋₄-Alkylamino, N,N-Di-C₁₋₄-alkylamino, oder Sulfato, dadurch gekennzeichnet, dass man eine diazotierte Diazokomponente der Formel 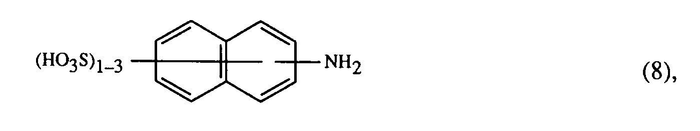 auf eine Kupplungskomponente der Formel 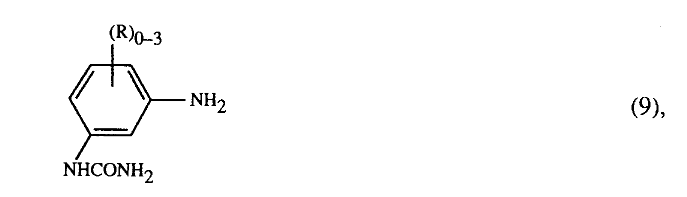 kuppelt und die so erhaltene Aminomonoazo-Verbindung und ein Amin der Formel 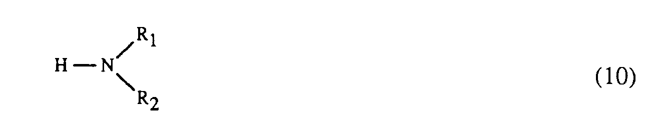 in beliebiger Folge mit 2,4,6-Trichlor-s-triazin kondensiert, wobei (R)₀₋₃, R₁ und R₂ die unter Formel (1) angegebenen Bedeutungen haben.

2. Verfahren gemäss Anspruch 1, dadurch gekennzeichnet, dass man eine diazotierte Diazokomponente der Formel 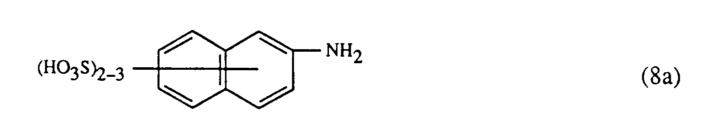 verwendet.

3. Verfahren gemäss einem der Ansprüche 1 und 2, dadurch gekennzeichnet, dass man ein Amin der Formel (10) verwendet, worin der Alkylrest R₁ und R₂ ein C₁₋₆-Alkylrest, insbesondere ein C₁₋₄-Alkylrest ist, der wie angegeben substituiert sein kann, und der Cycloalkylrest R₁ und R₂ ein Cyclohexylrest ist der wie angegeben substituiert sein kann.

4. Verfahren gemäss einem der Ansprüche 2 und 3, dadurch gekennzeichnet, dass man eine Kupplungskomponente der Formel 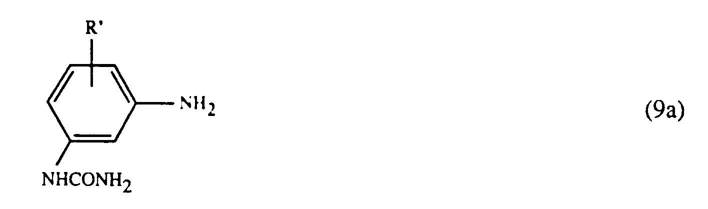 verwendet, worin R' Wasserstoff, Halogen, C₁₋₄-Alkoxy oder C₁₋₄-Alkyl ist und dass man ein Amin der Formel (10) verwendet, worin R₁ und R₂ die in Anspruch 3 angegebenen Bedeutungen haben.

5. Verfahren gemäss Anspruch 4, dadurch gekennzeichnet, dass man eine Kupplungskomponente der Formel 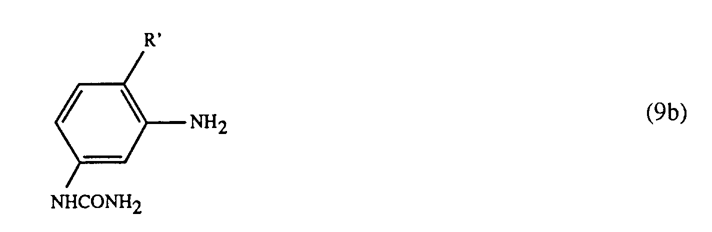 verwendet.

6. Verfahren gemäss Anspruch 5, dadurch gekennzeichnet, dass man eine diazotierte Diazokomponente der Formel 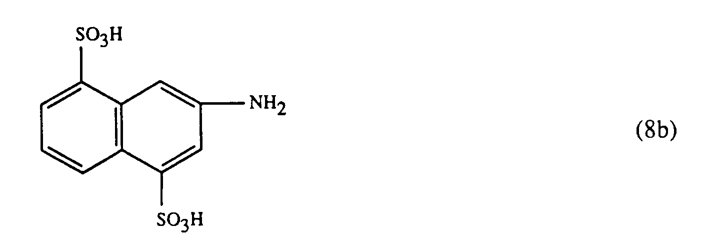 auf eine Kupplungskomponente der Formel 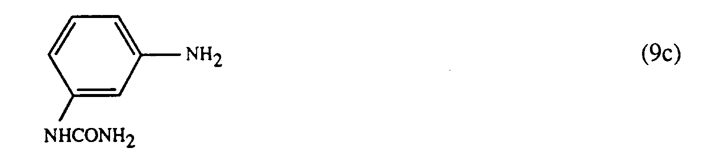 kuppelt, die erhaltene Aminomonoazo-Verbindung mit 2,4,6-Trichlor-s-triazin kondensiert und das primäre Kondensationsprodukt mit einem Amin der Formel
H-Z
kondensiert,
worin Z Hydroxy-C₁₋₄-alkylamino, Sulfato-C₁₋₄-alkylamino, HydroxyC₁₋₄-alkoxy-C₁₋₄-alkylamino, Sulfato-C₁₋₄-alkoxy-C₁₋₄-alkylamino, N-C₁₋₄-Alkyl-N-hydroxy-C₁₋₄-alkylamino, N-C₁₋₄-Alkyl-N-sulfato-C₁₋₄-alkylamino, N,N-Di(hydroxy-C₁₋₄-alkyl)-amino, N,N-Di(sulfato-C₁₋₄-alkyl)-amino, -NH-(CH₂CH₂-O)₂₋₄-CH₂CH₂-OH oder N-C₁₋₄-Alkyl-N-(CH₂CH₂-O)₂₋₄-CH₂CH₂-OH ist.

7. Verfahren gemäss Anspruch 5, dadurch gekennzeichnet, dass man eine diazotierte Diazokomponente der Formel 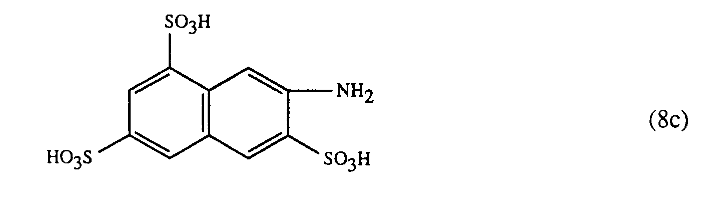 auf eine Kupplungskomponente der Formel 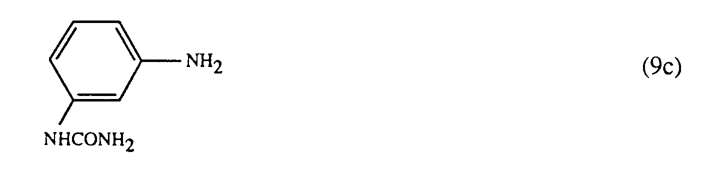 kuppelt, die erhaltene Aminomonoazo-Verbindung mit 2,4,6-Trichlor-s-triazin kondensiert und das primäre Kondensationsprodukt mit einem Amin der Formel
H-Z
kondensiert,
worin Z Hydroxy-C₁₋₄-alkylamino, Sulfato-C₁₋₄-alkylamino, Hydroxy-C₁₋₄-alkoxy-C₁₋₄-alkylamino, Sulfato-C₁₋₄-alkoxy-C₁₋₄-alkylamino, N-C₁₋₄-Alkyl-N-hydroxy-C₁₋₄-alkylamino, N-C₁₋₄-Alkyl-N-sulfato-C₁₋₄-alkylamino, N,N-Di(hydroxy-C₁₋₄-alkyl)amino, N,N-Di(sulfato-C₁₋₄-alkyl)-amino, -NH-(CH₂CH₂-O)₂₋₄-CH₂CH₂-OH oder -N-C₁₋₄-Alkyl-N-(CH₂CH₂-O)₂₋₄-CH₂CH₂-OH ist.

8. Verfahren gemäss einem der Ansprüche 6 und 7, dadurch gekennzeichnet, dass man ein Amin H-Z verwendet, worin Z β-Hycroxyäthylamino, β-Sulfatoäthylamino, β-(β'-Hydroxyäthoxy)-äthylamino, β-(β'-Sulfatoäthoxy)-äthylamino, Hydroxymethoxymethylamino, Sulfatomethoxymethylamino, N-Methyl-N-β-hydroxyäthylamino, N-Methyl-N-β-sulfatoäthylamino, N-Äthyl-N-β-hydroxyäthylamino, N-Äthyl-N-β-sulfatoäthylamino, N,N-Di-(β-hydroxyäthyl)-amino, N,N-Di-(β-sulfatoäthyl)amino, -NH-(CH₂CH₂-O)₂-CH₂CH₂-OH, -NH-(CH₂CH₂-O)₃-CH₂CH₂-OH, -NH-(CH₂CH₂-O)₄-CH₂CH₂-OH oder N-Methyl-N-β-(β'-hydroxyäthoxy)-äthylamino ist.

9. Verfahren gemäss Anspruch 8 zur Herstellung des Reaktivfarbstoffes der Formel 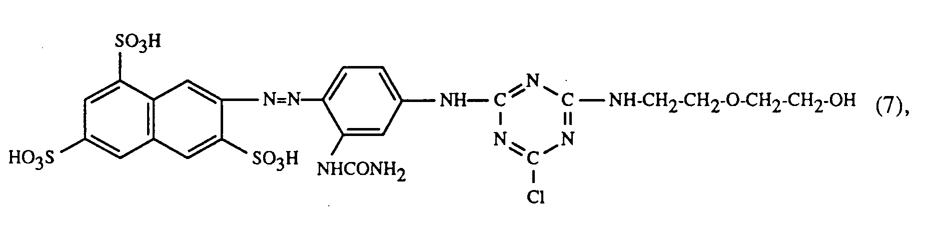 dadurch gekennzeichnet, dass man eine Monoazoverbindung der Formel 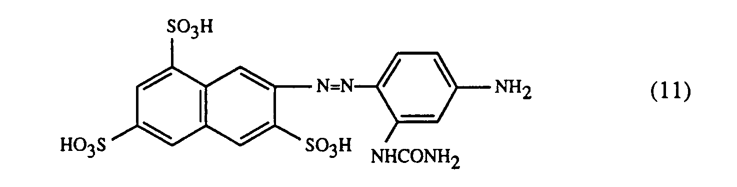 herstellt, diese mit 2,4,6-Trichlor-s-triazin kondensiert, und die erhaltene Dichlortriazin-Azoverbindung der Formel 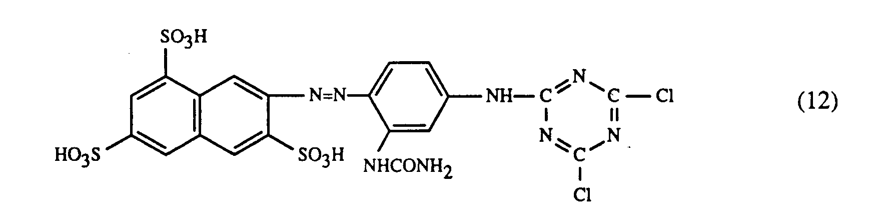 mit β-(β'-Hydroxyäthoxy)-äthylamin kondensiert.

10. Verwendung der gemäss Anspruch 1 erhältlichen Reaktivfarbstoffe zum Färben oder Bedrücken von textilen Fasermaterialien.

11. Verwendung gemäss Anspruch 10, zum Färben oder Bedrücken von Baumwolle.

12. Lagetttabile konzentrierte flüssige Farbstoffpräparationen von wasserlöslichen faserreaktiven Farbstoffen der Formel 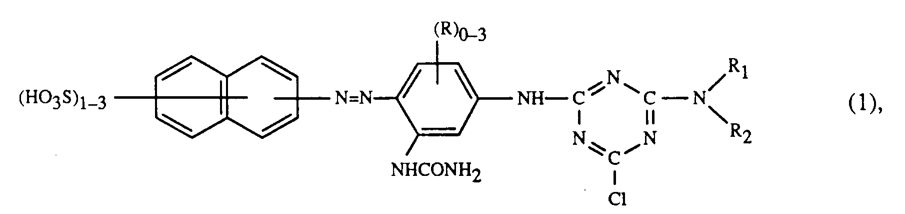 worin (R)₀₋₃ für 0 bis 3 Substituenten R aus der Gruppe Halogen, Nitro, Cyan, Trifluormethyl, Sulfamoyl, Carbamoyl, C₁₋₄-Alkyl, C₁₋₄-Alkoxy, Amino, Acetylamino, Ureido, Hydroxy, Carboxy, Sulfomethyl und Sulfo unabhäbgig voneinander steht, R₁ Wasserstoff, C₁₋₈-Alkyl oder C₅₋₇-Cycloalkyl und R₂ C₁₋₈-Alkyl oder C₅₋₇-Cycloalkyl ist, wobei die Alkyl- und Cycloalkylreste R₁ und R₂ unabhängig voneinander substituiert sein können durch Hydroxy, C₁₋₄-Alkoxy, Hydroxy-C₁₋₄-alkoxy, HO-(CH₂CH₂-O)₂₋₄-, Sulfato-C₁₋₄-alkoxy, C₂₋₄-Alkanoyl, C₁₋₄-Alkoxy-carbonyl, C₂₋₄-Alkanoyloxy, Carboxy, Cyan, Halogen, C₁₋₄-Alkylamino, N,N-Di-C₁₋₄-alkylamino, oder Sulfato, oder worin R₁ C₁₋₈-Alkyl oder C₅₋₇-Cycloalkyl ist, und der Alkyl- oder Cycloalkylrest wie angegeben substituiert sein kann, und R₂ ein durch Sulfo substituierter C₁₋₈-Alkyl- oder C₅₋₇-Cycloalkylrest ist.

## Claims (Claims for the following Contracting State(s): BE, CH, DE, FR, GB, LI, IT)

1. A reactive dye of the formula 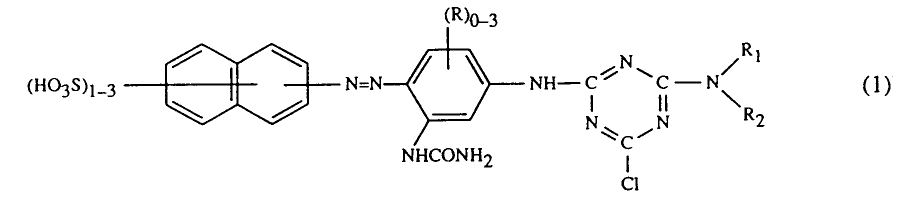 in which (R)₀₋₃ is 0-3 substituents R, independent of one another, from the group comprising halogen, nitro, cyano, trifluoromethyl, sulfamoyl, carbamoyl, C₁₋₄alkyl, C₁₋₄alkoxy, amino, acetylamino, ureido, hydroxyl, carboxyl, sulfomethyl and sulfo, R₁ is hydrogen, C₁₋₈alkyl or C₅₋₇cycloalkyl and R₂ is C₁₋₈alkyl or C₅₋₇cycloalkyl, it being possible for the alkyl and cycloalkyl radicals R₁ and R₂ to be substituted independently of one another by hydroxyl, C₁₋₄alkoxy, hydroxy-C₁₋₄alkoxy HO-(CH₂CH₂-O)₂₋₄-, sulfato-C₁₋₄alkoxy, C₂₋₄alkanoyl, C₁₋₄alkoxy-carbonyl, C₂₋₄alkanoyloxy, carboxyl, cyano, halogen, C₁₋₄alkylamino, or N,N-Di-C₁₋₄alkylamino, or sulfato.

2. A reactive dye according to claim 1, of the formula 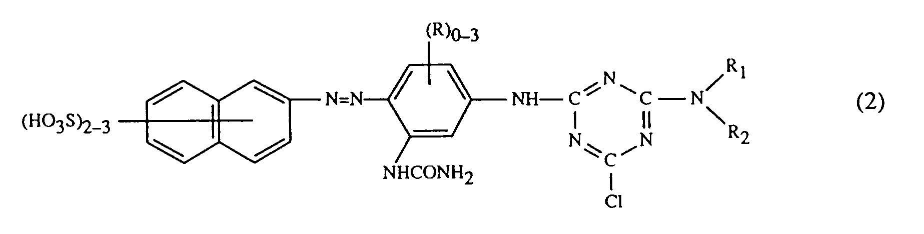 in which (R)₀₋₃, R₁ and R₂ are as defined in claim 1.

3. A reactive dye according to either of claims 1 and 2, in which the alkyl radicals R₁ and R₂ are a C₁₋₆alkyl radical, in particular a C₁₋₄alkyl radical, which can be substituted as described, and the cycloalkyl radicals R₁ and R₂ are a cyclohexyl radical, which can be substituted as defined.

4. A reactive dye as claimed in either of claims 2 and 3, of the formula 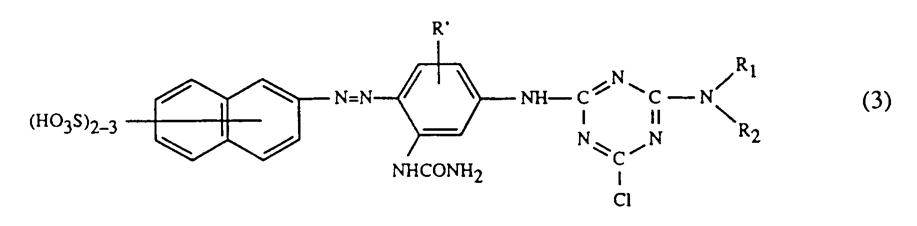 in which R' is hydrogen, halogen, C₁₋₄alkoxy or C₁₋₄alkyl and R₁ and R₂ are as defined in claim 3.

5. A reactive dye according to claim 4, of the formula 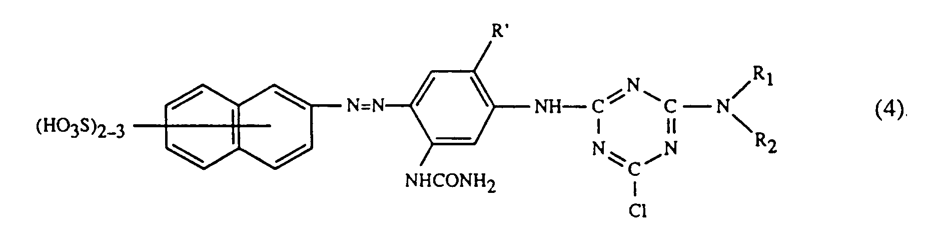 in which R', R₁ and R₂ are as defined in claim 4.

6. A reactive dye according to claim 5, of the formula 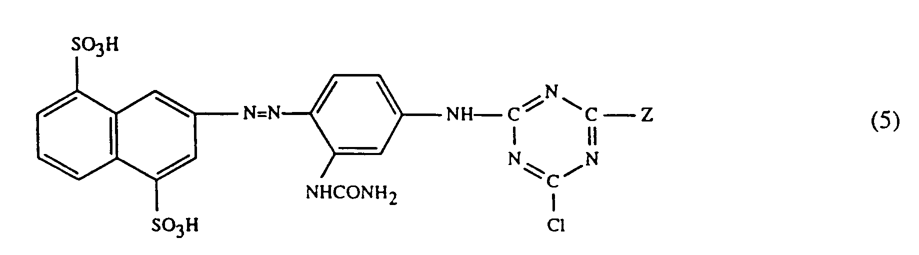 in which Z is hydroxy-C₁₋₄alkylamino sulfato-C₁₋₄alkylamino, hydroxy-C₁₋₄alkoxy-C₁₋₄alkylamino, sulfato-C₁₋₄alkoxy-C₁₋₄alkylamino, N-C₁₋₄alkyl-N-hydroxy-C₁₋₄alkylamino, N-C₁₋₄alkyl-N-sulfato-C₁₋₄alkylamino, N,N-di(hydroxy-C₁₋₄alkyl)-amino, N,N-di(sulfato-C₁₋₄alkyl)-amino, -NH- (CH₂CH₂-O)₂₋₄-CH₂CH₂-OH or N-C₁₋₄alkyl-N- (CH₂CH₂-O)₂₋₄-CH₂CH₂-OH.

7. A reactive dye according to claim 5, of the formula 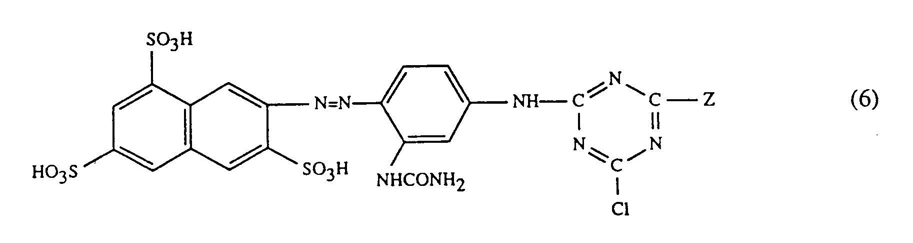 in which Z is hydroxy-C₁₋₄alkylamino, sulfato-C₁₋₄alkylamino, hydroxy-C₁₋₄alkoxy-C₁₋₄alkylamino, sulfato-C₁₋₄alkoxy-C₁₋₄alkylamino, N-C₁₋₄alkyl-N-hydroxy-C₁₋₄alkylamino, N-C₁₋₄alkyl-N-sulfato-C₁₋₄alkylamino, N,N-di(hydroxy-C₁₋₄alkyl)-amino, N,N-di(sulfato-C₁₋₄alkyl)-amino -NH-(CH₂CH₂-O)₂₋₄-CH₂CH₂-OH or -N-C₁₋₄alkyl-N-(CH₂CH₂-O)₂₋₄-CH₂CH₂-OH.

8. A reactive dye according to either of claims 6 and 7, in which Z is β-hydroxyethylamino, β-sulfatoethylamino, β-(β'-hydroxyethoxy)-ethylamino, β-(β'-sulfatoethoxy)-ethylamino, hydroxymethoxymethylamino, sulfatomethoxymethylamino, N-methyl-N-β-hydroxyethylamino, N-methyl-N-β-sulfatoethylamino, N-ethyl-N-β-hydroxyethylamino, N-ethyl-N-β-sulfatoethylamino N,N-di-(β-hydroxyethyl)-amino, N,N-di-(β-sulfatoethyl)-amino, -NH-(CH₂CH₂-O)-CH₂CH₂-OH , -NH-(CH₂CH₂-O)₃-CH₂CH₂-OH, -NH-(CH₂CH₂-O)₄-CH₂CH₂-OH or N-methyl-N-β-(β'-hydroxyethoxy)-ethylamino.

9. The reactive dye according to claim 8, of the formula

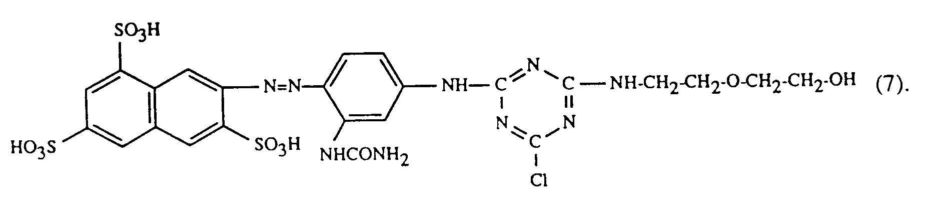

10. A process for the preparation of the reactive dye of the formula (1) according to claim 1, which comprises coupling a diazotized diazo component of the formula 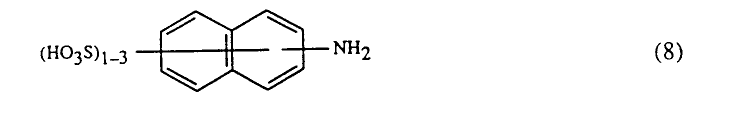 to a coupling component of the formula 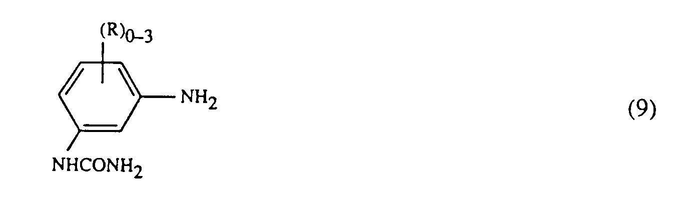 and subjecting the aminomonoazo compound thus obtained and an amine of the formula 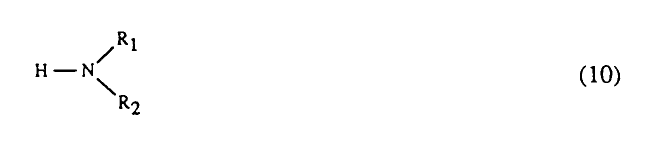 to a condensation reaction with 2,4,6-trichloro-s-triazine in any order, (R)₀₋₃, R₁ and R₂ being as defined in claim 1.

11. The use of a reactive dye according to claim 1 for dyeing or printing textile fibre materials.

12. The use according to claim 11, for dyeing or printing cotton.

13. A storage-stable concentrated liquid dye preparation of a water-soluble fibre-reactive dye according to claim 1.

## Claims (Claims for the following Contracting State(s): ES)

1. A process for the preparation of a reactive dye of the formula 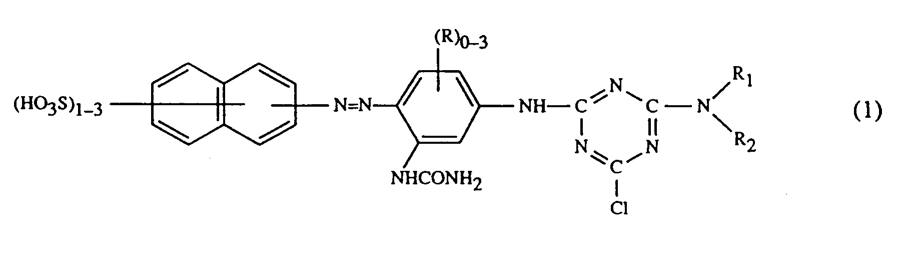 in which (R)₀₋₃ is 0-3 substituents R, independent of one another, from the group comprising halogen, nitro, cyano, trifluoromethyl, sulfamoyl, carbamoyl, C₁₋₄alkyl, C₁₋₄alkoxy, amino, acetylamino, ureido, hydroxyl, carboxyl, sulfomethyl and sulfo, R₁ is hydrogen, C₁₋₈alkyl or C₅₋₇cycloalkyl and R₂ is C₁₋₈alkyl or C₅₋₇cycloalkyl, it being possible for the alkyl and cycloalkyl radicals R₁ and R₂ to be substituted independently of one another by hydroxyl, C₁₋₄alkoxy, hydroxy-C₁₋₄alkoxy, HO-(CH₂CH₂-O)₂₋₄-, sulfato-C₁₋₄alkoxy, C₂₋₄alkanoyl, C₁₋₄alkoxy-carbonyl, C₂₋₄alkanoyloxy, carboxyl, cyano, halogen, C₁₋₄alkylamino, or N,N-Di-C₁₋₄alkylamino, or sulfato which comprises coupling a diazotized diazo component of the formula 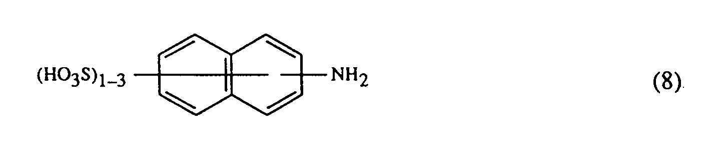 to a coupling component of the formula 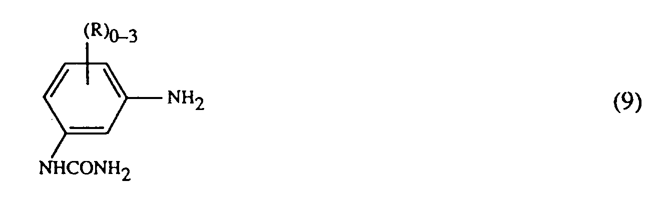 and subjecting the aminomonoazo compound thus obtained and an amine of the formula 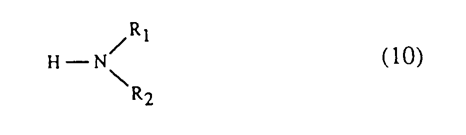 to a condensation reaction with 2,4,6-trichloro-S-triazine in any order, (R)₀₋₃, R₁ and R₂ being as defined under formula (1).

2. A process according to claim 1, which comprises using a diazotized diazo component of the formula

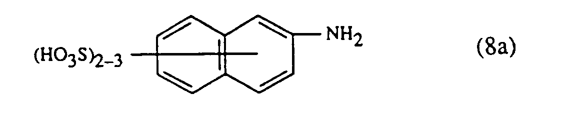

3. A process according to either of claims 1 and 2, which comprises using an amine of the formula (10) in which the alkyl radicals R₁ and R₂ are a C₁₋₆alkyl radical, in particular a C₁₋₄alkyl radical, which can be substituted as described, and the cycloalkyl radicals R₁ and R₂ are a cyclohexyl radical, which can be substituted as defined.

4. A process as claimed in either of claims 2 and 3, which comprises using a coupling component of the formula 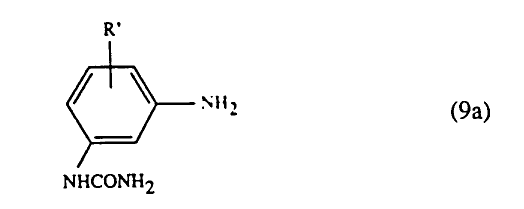 in which R' is hydrogen, halogen, C₁₋₄alkoxy or C₁₋₄alkyl and which comprises using an amine of the formula (10) in which R₁ and R₂ are as defined in claim 3.

5. A process according to claim 4, which comprises using a coupling component of the formula

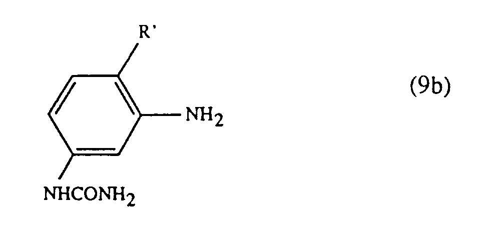

6. A process according to claim 5, which comprises coupling a diazotized diazo component of the formula 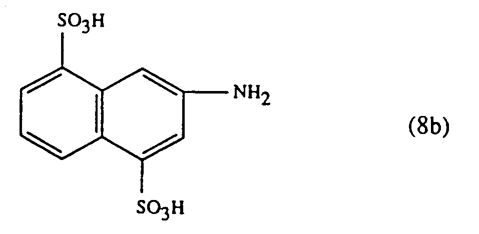 to a coupling component of the formula 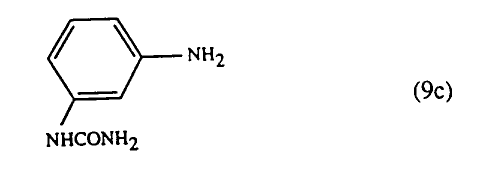 subjecting the aminomonoazo compound obtained to a condensation reaction with 2,4,6-trichloro-s-triazine and subjecting the primary condensation product to a condensation reaction with an amine of the formula
H - Z
in which Z is hydroxy-C₁₋₄alkylamino, sulfato-C₁₋₄alkylamino, hydroxy-C₁₋₄alkoxy-C₁₋₄alkylamino, sulfato-C₁₋₄alkoxy-C₁₋₄alkylamino, N-C₁₋₄alkyl-N-hydroxy-C₁₋₄alkylamino, N-C₁₋₄alkyl-N-sulfato-C₁₋₄alkylamino, N,N-di(hydroxy-C₁₋₄alkyl)-amino, N,N-di(sulfato-C₁₋₄alkyl)-amino, -NH-(CH₂CH₂-O)₂₋₄-CH₂CH₂-OH or N-C₁₋₄alkyl-N-(CH₂CH₂-O)₂₋₄-CH₂CH₂-OH.

7. A process according to claim 5, which comprises coupling a diazotized diazo component of the formula 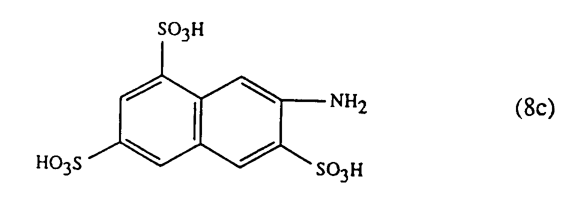 to a coupling component of the formula 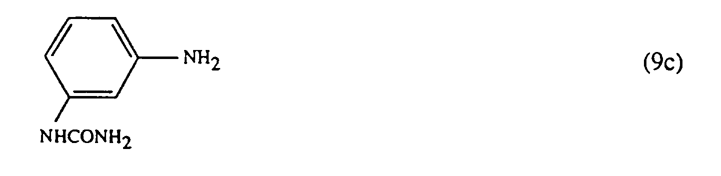 subjecting the aminomonoazo compound obtained to a condensation reaction with 2,4,6-trichloro-s-triazine and subjecting the primary condensation product to a condensation reaction with an amine of the formula
H - Z
in which Z is hydroxy-C₁₋₄alkylamino, sulfato-C₁₋₄alkylamino, hydroxy-C₁₋₄alkoxy-C₁₋₄alkylamino, sulfato-C₁₋₄alkoxy-C₁₋₄alkylamino, N-C₁₋₄alkyl-N-hydroxy-C₁₋₄alkylamino, N-C₁₋₄alkyl-N-sulfato-C₁₋₄alkylamino, N,N-di(hydroxy-C₁₋₄alkyl)-amino, N,N-di(sulfato-C₁₋₄alkyl)-amino, -NH- (CH₂CH₂-O)₂₋₄-CH₂CH₂-OH or -N-C₁₋₄alkyl-N- (CH₂CH₂-O)₂₋₄-CH₂CH₂OH.

8. A process according to either of claims 6 and 7, which comprises using an amine H-Z in which Z is β-hydroxyethylamino, β-sulfatoethylamino, β-(β'-hydroxyethoxy)-ethylamino, β-(β'-sulfatoethoxy)-ethylamino, hydroxymethoxymethylamino, sulfatomethoxymethylamino, N-methyl-N-β-hydroxyethylamino, N-methyl-N-β-sulfatoethylamino, N-ethyl-N-β-hydroxyethylamino, N-ethyl-N-β-sulfatoethylamino, N,N-di-(β-hydroxyethyl)-amino, N,N-di-(β-sulfatoethyl)-amino, -NH-(CH₂CH₂-O)₂-CH₂CH₂-OH, -NH- (CH₂CH₂-O)₃-CH₂CH₂-OH, -NH-(CH₂CH₂-O)₄-CH₂CH₂-OH or N-methyl-N-β-(β'-hydroxyethoxy)-ethylamino.

9. A process according to claim 8 for the preparation of a reactive dye of the formula 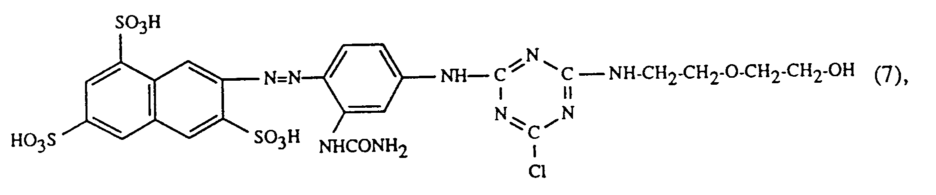 which comprises preparing a monoazo compound of the formula 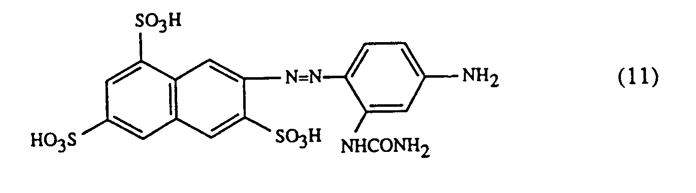 subjecting the latter to a condensation reaction with 2,4,6-trichloro-s-triazine and subjecting the dichlorotriazine azo compound obtained of the formula 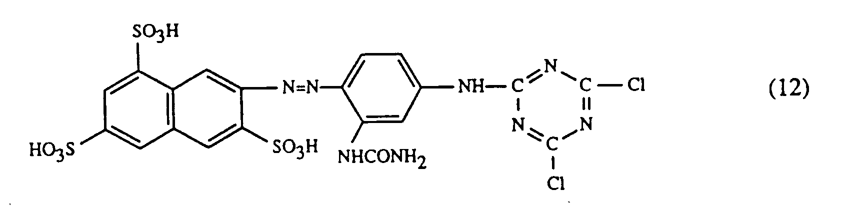 to a condensation reaction with β-(β'-hydroxyethoxy)ethylamine.

10. The use of a reactive dye obtainable according to claim 1 for dyeing or printing textile fibre materials.

11. The use according to claim 10, for dyeing or printing cotton.

12. A storage-stable concentrated liquid dye preparation of a water-soluble fibre-reactive dye of the formula 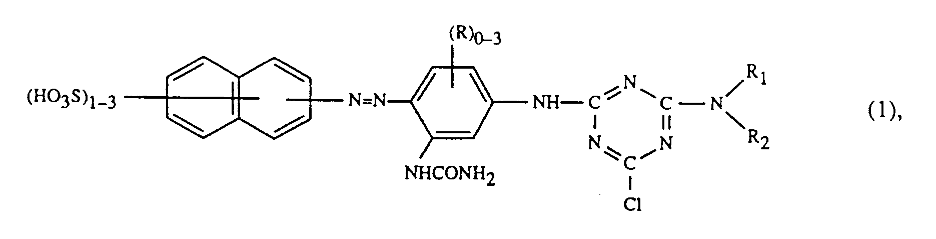 in which (R)₀₋₃ is 0-3 substituents R, independent of one another, from the group comprising halogen, nitro, cyano, trifluoromethyl, sulfamoyl, carbamoyl, C₁₋₄alkyl, C₁₋₄alkoxy, amino, acetylamino, ureido, hydroxyl, carboxyl, sulfomethyl and sulfo, R₁ is hydrogen, C₁₋₈alkyl or C₅₋₇cycloalkyl and R₂ is C₁₋₈alkyl or C₅₋₇cycloalkyl, it being possible for the alkyl and cycloalkyl radicals R₁ and R₂ to be substituted independently of one another by hydroxyl, C₁₋₄alkoxy, hydroxy-C₁₋₄alkoxy, HO-(CH₂CH₂-O)₂₋₄-, sulfato-C₁₋₄alkoxy, C₂₋₄alkanoyl, C₁₋₄alkoxy-carbonyl, C₂₋₄alkanoyloxy, carboxyl, cyano, halogen, C₁₋₄alkylamino, or N,N-Di-C₁₋₄alkylamino, or sulfato, or in which R₁ is C₁₋₈alkyl or C₅₋₇cycloalkyl, and the alkyl or cycloalkyl radical can be substituted as defined, and R₂ is a C₁₋₈alkyl or C₅₋₇cycloalkyl radical which is substituted by sulfo.

## Revendications (Revendications pour l'(les) Etat(s) contractant(s) suivant(s): BE, CH, DE, FR, GB, LI, IT)

1. Colorants réactifs de formule : 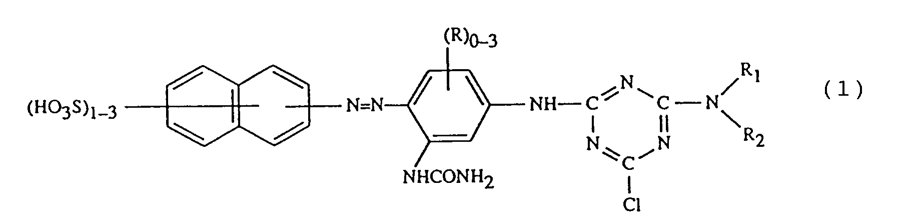 dans laquelle
(R)₀₋₃ représente de 0 à 3 substituants R, choisis indépendamment l'un de l'autre dans l'ensemble constitué par les atomes d'halogène et les groupes nitro, cyano, trifluorométhyle, sulfamyle, carbamyle, alkyle en C₁-C₄, alcoxy en C₁-C₄, amino, acétylamino, uréido, hydroxy, carboxy, sulfométhyle et sulfo,
R₁ représente un atome d'hydrogène ou un groupe alkyle en C₁-C₈ ou cycloalkyle en C₅-C₇, et R₂ représente un groupe alkyle en C₁-C₈ ou cycloalkyle en C₅-C₇, les groupes alkyle et cycloalkyle symbolisés par R₁ et R₂ pouvant porter, indépendamment l'un de l'autre, des substituants hydroxy, alcoxy en C₁-C₄, hydroxyalcoxy en C₁-C₄, HO-(CH₂-CH₂-O)₂₋₄-, sulfatoalcoxy en C₁-C₄, alcanoyle en C₂-C₄, (alcoxy en C₁-C₄ ) -carbonyle, alcanoyloxy en C₂-C₄, carboxy, cyano, halogéno, (alkyl en C₁-C₄)-amino, N,N-di-(alkyl en C₁-C₄)-amino ou sulfato.

2. Colorants réactifs conformes à la revendication 1, de formule : 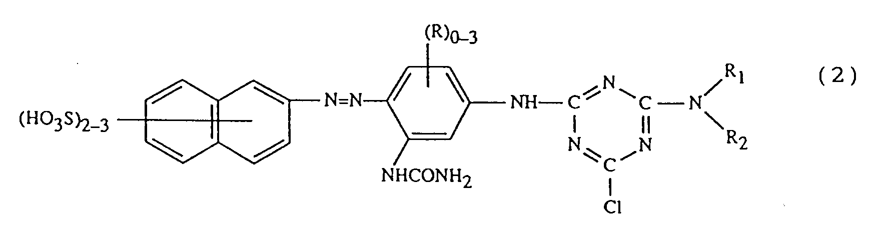 dans laquelle (R)₀₋₃, R₁ et R₂ ont les significations indiquées dans la revendication 1.

3. Colorants réactifs conformes à l'une des revendications 1 et 2, dans lesquels les groupes alkyle symbolisés par R₁ et R₂ sont des groupes alkyle en C₁-C₆, en particulier des groupes alkyle en C₁-C₄, qui peuvent porter les substituants indiqués, et les groupes cycloalkyle symbolisés par R₁ et R₂ sont des groupes cyclohexyle qui peuvent porter les substituants indiqués.

4. Colorants réactifs conformes à l'une des revendications 2 et 3, de formule : 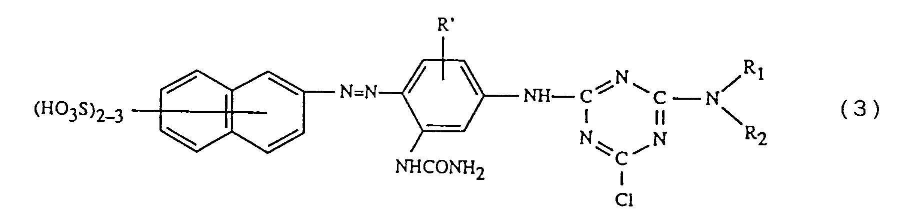 dans laquelle R' représente un atome d'hydrogène ou d'halogène ou un groupe alcoxy en C₁-C₄ ou alkyle en C₁-C₄, et R₁ et R₂ ont les significations indiquées dans la revendication 3.

5. Colorants réactifs conformes à la revendication 4, de formule : 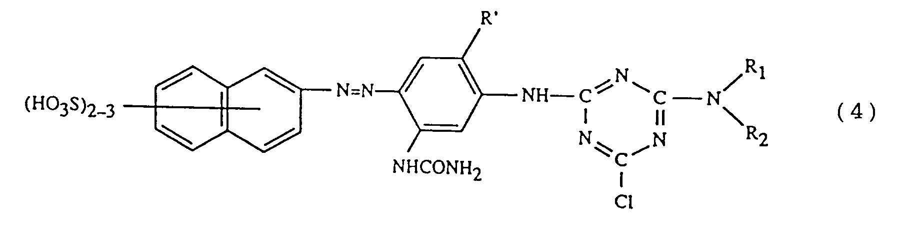 dans laquelle R', R₁ et R₂ ont les significations indiquées dans la revendication 4.

6. Colorants réactifs conformes à la revendication 5, de formule : 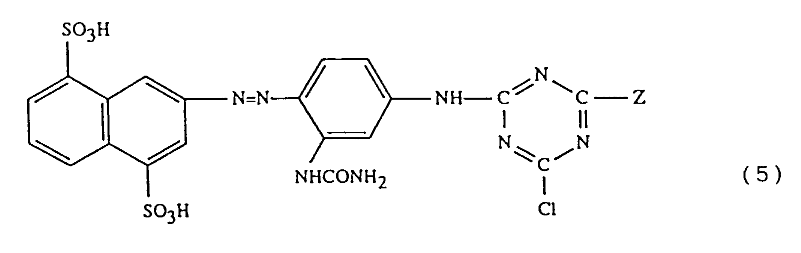 dans laquelle Z représente un groupe hydroxy-(alkyle en C₁-C₄)-amino, sulfato-(alkyle en C₁-C₄)-amino, hydroxy-(alcoxy en C₁-C₄)-(alkyle en C₁-C₄)-amino, sulfato-(alcoxy en C₁-C₄)-(alkyle en C₁-C₄)-amino, N-(alkyle en C₁-C₄)-N-(hydroxyalkyle en C₁-C₄ ) -amino, N-(alkyle en C₁-C₄ ) -N-(sulfatoalkyle en C₁-C₄)-amino, N,N-di-(hydroxyalkyle en C₁-C₄)-amino, N,N-di-(sulfatoalkyle en C₁-C₄)-amino, -NH-(CH₂CH₂-O)₂₋₄-CH₂CH₂-OH ou N-(alkyle en C₁-C₄)-N-(CH₂CH₂-O)₂₋₄-CH₂CH₂-OH.

7. Colorants réactifs conformes à la revendication 5, de formule : 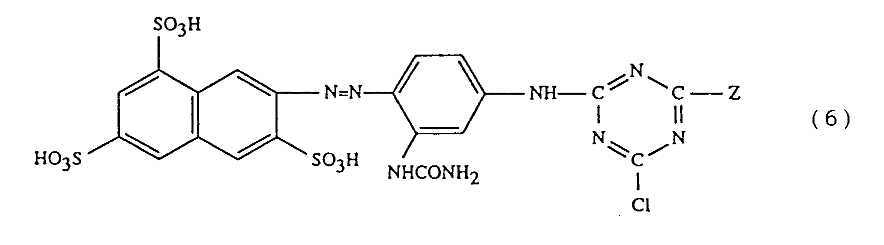 dans laquelle Z représente un groupe hydroxy-(alkyle en C₁-C₄)-amino, sulfato-(alkyle en C₁-C₄)-amino, hydroxy-(alcoxy en C₁-C₄)-(alkyle en C₁-C₄)-amino, sulfato-(alcoxy en C₁-C₄)-(alkyle en C₁-C₄)-amino, N-(alkyle en C₁-C₄)-N-(hydroxyalkyle en C₁-C₄)-amino, N-(alkyle en C₁-C₄ )-N-(sulfatoalkyle en C₁-C₄)-amino, N,N-di-(hydroxyalkyle en C₁-C₄)-amino, N,N-di-(sulfatoalkyle en C₁-C₄)-amino, -NH-(CH₂CH₂-O)₂₋₄-CH₂CH₂-OH ou N-(alkyle en C₁-C₄)-N-(CH₂CH₂-O)₂₋₄-CH₂CH₂-OH.

8. Colorants réactifs conformes à l'une des revendications 6 et 7, dans lesquels Z représente un groupe β-hydroxyéthylamino, β-sulfatoéthylamino, β-(β'-hydroxyéthoxy)-éthylamino, β-(β'-sulfatoéthoxy)-éthylamino, hydroxyméthoxyméthylamino, sulfatométhoxyméthylamino, N-méthyl-N-β-hydroxyéthylamino, N-méthyl-N-β-sulfatoéthylamino, N-éthyl-N-β-hydroxyéthylamino, N-éthyl-N-β-sulfatoéthylamino, N,N-di-(β-hydroxyéthyl)-amino, N,N-di-(β-sulfatoéthyl)-amino, -NH-(CH₂CH₂-O)₂-CH₂CH₂-OH, -NH-(CH₂CH₂-O)₃-CH₂CH₂-OH, -NH-(CH₂CH₂-O)₄-CH₂CH₂-OH ou N-méthyl-N-β-(β'-hydroxyéthoxy)-éthylamino.

9. Colorant réactif conforme à la revendication 8, de formule :

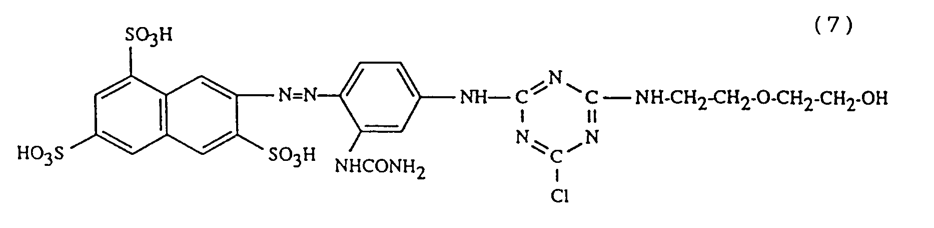

10. Procédé de préparation de colorants réactifs de formule (1), conformes à la revendication 1, caractérisé en ce que l'on fait copuler un composant diazotable de formule 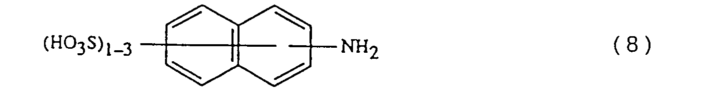 après l'avoir diazoté, sur un copulant de formule : 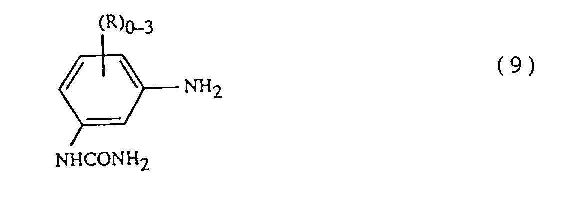 et en ce que l'on condense le composé monoazoïque aminé ainsi obtenu et une amine de formule : 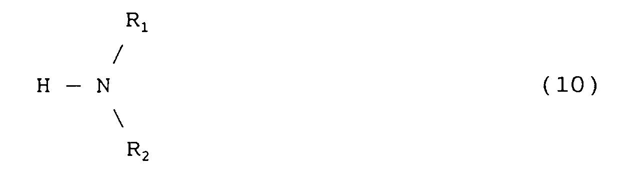 avec de la 2,4,6-trichloro-s-triazine, dans un ordre quelconque, les symboles (R)₀₋₃, R₁ et R₂ ayant dans ces formules les significations indiquées dans la revendication 1.

11. Emploi des colorants réactifs conformes à la revendication 1, pour teindre ou imprimer des matières fibreuses textiles.

12. Emploi conforme à la revendication 11, pour teindre ou imprimer du coton.

13. Formulations liquides concentrées, stables en magasin, des colorants hydrosolubles, réactifs vis-à-vis des fibres, conformes à la revendication 1.

## Revendications (Revendications pour l'(les) Etat(s) contractant(s) suivant(s): ES)

1. Procédé de préparation de colorants réactifs de formule : 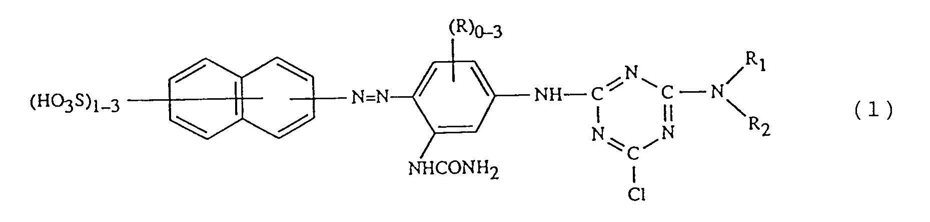 dans laquelle
(R)₀₋₃ représente de 0 à 3 substituants R, choisis indépendamment l'un de l'autre dans l'ensemble constitué par les atomes d'halogène et les groupes nitro, cyano, trifluorométhyle, sulfamyle, carbamyle, alkyle en C₁-C₄, alcoxy en C₁-C₄, amino, acétylamino, uréido, hydroxy, carboxy, sulfométhyle et sulfo,
R₁ représente un atome d'hydrogène ou un groupe alkyle en C₁-C₈ ou cycloalkyle en C₅-C₇, et R₂ représente un groupe alkyle en C₁-C₈ ou cycloalkyle en C₅-C₇, les groupes alkyle et cycloalkyle symbolisés par R₁ et R₂ pouvant porter, indépendamment l'un de l'autre, des substituants hydroxy, alcoxy en C₁-C₄, hydroxyalcoxy en C₁-C₄, HO-(CH₂-CH₂-O)₂₋₄-, sulfatoalcoxy en C₁-C₄, alcanoyle en C₂-C₄, ( alcoxy en C₁-C₄)-carbonyle, alcanoyloxy en C₂-C₄, carboxy, cyano, halogéno, (alkyl en C₁-C₄)-amino, N,N-di-(alkyl en C₁-C₄)-amino ou sulfato,
caractérisé en ce que l'on fait copuler un composant diazotable de formule 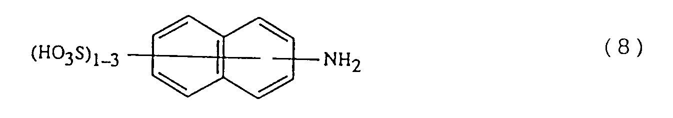 après l'avoir diazoté, sur un copulant de formule : 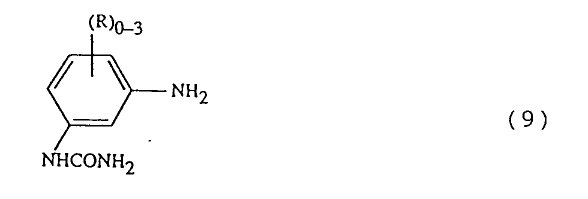 et en ce que l'on condense le composé monoazoïque aminé ainsi obtenu et une amine de formule : 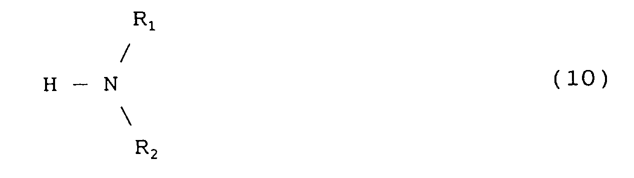 avec de la 2,4,6-trichloro-s-triazine, dans un ordre quelconque, les symboles (R)₀₋₃, R₁ et R₂ ayant les significations indiquées à propos de la formule (1).

2. Procédé conforme à la revendication 1, caractérisé en ce que l'on utilise, après l'avoir diazoté, un composant diazotable de formule :

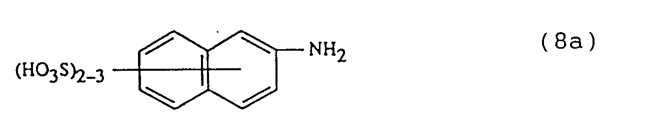

3. Procédé conforme à l'une des revendications 1 et 2, caractérisé en ce que l'on utilise une amine de formule (10) dans laquelle les groupes alkyle symbolisés par R₁ et R₂ sont des groupes alkyle en C₁-C₆, en particulier des groupes alkyle en C₁-C₄, qui peuvent porter les substituants indiqués, et les groupes cycloalkyle symbolisés par R₁ et R₂ sont des groupes cyclohexyle qui peuvent porter les substituants indiqués.

4. Procédé conforme à l'une des revendications 2 et 3, caractérisé en ce que l'on utilise un copulant de formule : 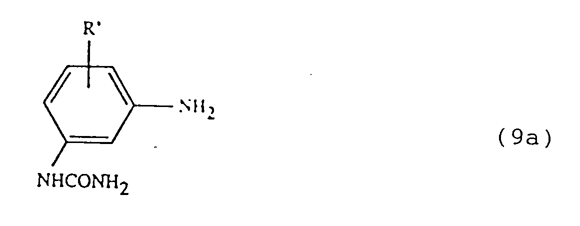 dans laquelle R' représente un atome d'hydrogène ou d'halogène ou un groupe alcoxy en C₁-C₄ ou alkyle en C₁-C₄, et en ce que l'on utilise une amine de formule (10) dans laquelle R₁ et R₂ ont les significations indiquées dans la revendication 3.

5. Procédé conforme à la revendication 4, caractérisé en ce que l'on utilise un copulant de formule :

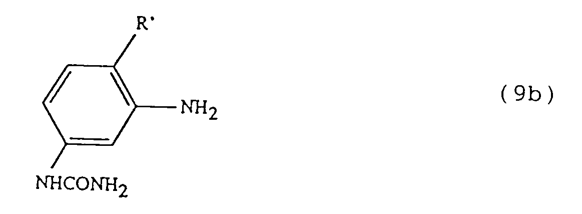

6. Procédé conforme à la revendication 5, caractérisé en ce que l'on fait copuler, après l'avoir diazoté, un composant diazotable de formule : 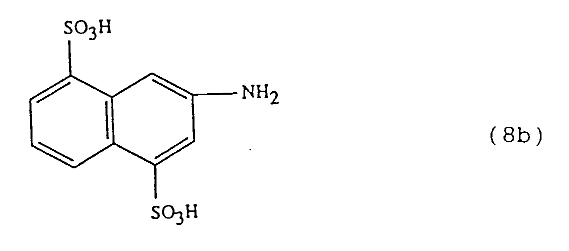 sur un copulant de formule : 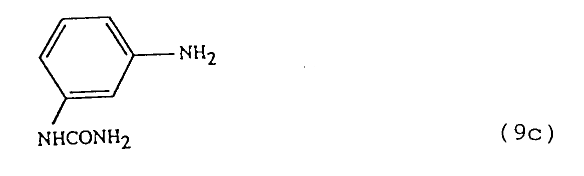 on condense le composé monoazoïque aminé ainsi obtenu avec de la 2,4,6-trichloro-s-triazine, et l'on condense le produit de cette première condensation avec une amine de formule :
H-Z
dans laquelle Z représente un groupe hydroxy-(alkyle en C₁-C₄)-amino, sulfato-(alkyle en C₁-C₄)-amino, hydroxy(alcoxy en C₁-C₄)-(alkyle en C₁-C₄)-amino, sulfato-(alcoxy en C₁-C₄)-(alkyle en C₁-C₄)-amino, N-(alkyle en C₁-C₄)-N-( hydroxyalkyle en C₁-C₄)-amino, N-(alkyle en C₁-C₄)-N-(sulfatoalkyle en C₁-C₄)-amino, N,N-di-(hydroxyalkyle en C₁-C₄)-amino, N,N-di-(sulfatoalkyle en C₁-C₄)-amino, -NH-(CH₂CH₂-O)₂₋₄-CH₂CH₂-OH ou N-(alkyle en C₁-C₄)-N-(CH₂CH₂O)₂₋₄-CH₂CH₂-OH.

7. Procédé conforme à la revendication 5, caractérisé en ce que l'on fait copuler, après l'avoir diazoté, un composant diazotable de formule : 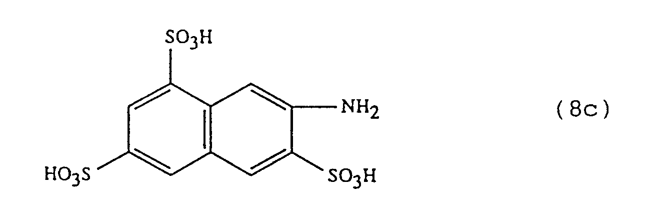 sur un copulant de formule : 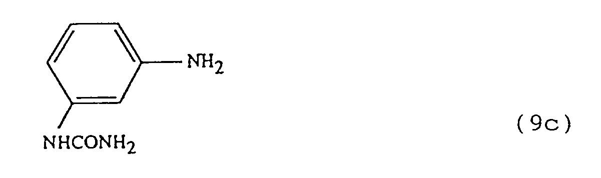 on condense le composé monoazoïque aminé ainsi obtenu avec de la 2,4,6-trichloro-s-triazine, et l'on condense le produit de cette première condensation avec une amine de formule :
H-Z
dans laquelle Z représente un groupe hydroxy-(alkyle en C₁-C₄)-amino, sulfato-(alkyle en C₁-C₄)-amino, hydroxy-(alcoxy en C₁-C₄)-(alkyle en C₁-C₄)-amino, sulfato-(alcoxy en C₁-C₄)-(alkyle en C₁-C₄)-amino, N-(alkyle en C₁-C₄)-N-(hydroxyalkyle en C₁-C₄)-amino, N-(alkyle en C₁-C₄)-N-(sulfatoalkyle en C₁-C₄)-amino, N,N-di-(hydroxyalkyle en C₁-C₄)-amino, N,N-di-(sulfatoalkyle en C₁-C₄)-amino, -NH-(CH₂CH₂-O)₂₋₄-CH₂CH₂-OH ou N-(alkyle en C₁-C₄)-N-(CH₂CH₂-O)₂₋₄-CH₂CH₂-OH.

8. Procédé conforme à l'une des revendications 6 et 7, caractérisé en ce que l'on utilise une amine de formule H-Z dans laquelle Z représente un groupe β-hydroxyéthylamino, β-sulfatoéthylamino, β-(β'-hydroxyéthoxy)-éthylamino, β-(β'-sulfatoéthoxy)-éthylamino, hydroxyméthoxyméthylamino, sulfatométhoxyméthylamino, N-méthyl-N-β-hydroxyèthylamino, N-méthyl-N-β-sulfatoéthylamino, N-éthyl-N-β-hydroxyéthylamino, N-éthyl-N-β-sulfatoéthylamino, N,N-di-(β-hydroxyéthyl)-amino, N,N-di-(β-sulfatoéthyl)-amino, -NH-(CH₂CH₂-O)₂-CH₂CH₂-OH, -NH-(CH₂CH₂-O)₃-CH₂CH₂-OH, -NH-(CH₂CH₂-O)₄-CH₂CH₂-OH ou N-méthyl-N-β-(β'-hydroxyéthoxy)-éthylamino.

9. Procédé, conforme à la revendication 8, de préparation du colorant réactif de formule : 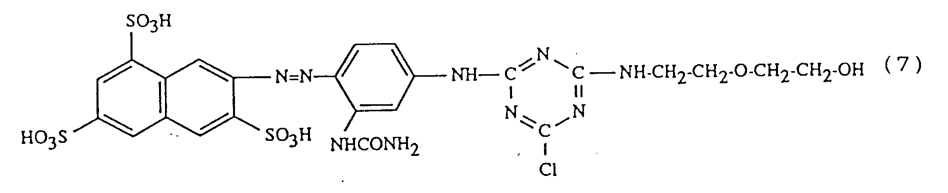 caractérisé en ce que l'on prépare un composé monoazoïque de formule : 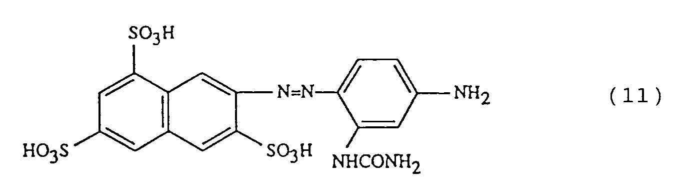 on condense celui-ci avec de la 2,4,6-trichloro-s-triazine, et l'on condense le composé de type dichlorotriazine-azoïque ainsi obtenu, de formule : 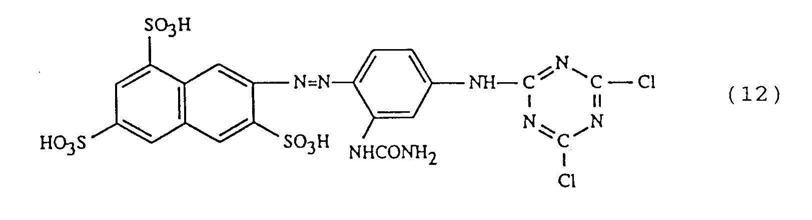 avec de la β-(β'-hydroxyéthoxy)-éthylamine.

10. Emploi des colorants réactifs obtenus conformément à la revendication 1, pour teindre ou imprimer des matières fibreuses textiles.

11. Emploi conforme à la revendication 10, pour teindre ou imprimer du coton.

12. Formulations liquides concentrées, stables en magasin, des colorants hydrosolubles, réactifs vis-à-vis des fibres, de formule : 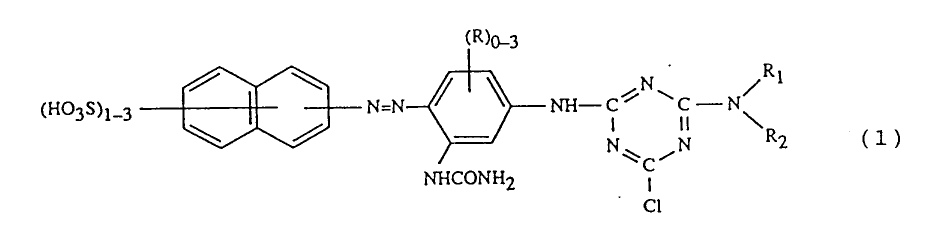 dans laquelle
(R)₀₋₃ représente de 0 à 3 substituants R, choisis indépendamment l'un de l'autre dans l'ensemble constitué par les atomes d'halogène et les groupes nitro, cyano, trifluorométhyle, sulfamyle, carbamyle, alkyle en C₁-C₄, alcoxy en C₁-C₄, amino, acétylamino, uréido, hydroxy, carboxy, sulfométhyle et sulfo,
R₁ représente un atome d'hydrogène ou un groupe alkyle en C₁-C₈ ou cycloalkyle en C₅-C₇, et R₂ représente un groupe alkyle en C₁-C₈ ou cycloalkyle en C₅-C₇, les groupes alkyle et cycloalkyle symbolisés par R₁ et R₂ pouvant porter, indépendamment l'un de l'autre, des substituants hydroxy, alcoxy en C₁-C₄, hydroxyalcoxy en C₁-C₄, HO-(CH₂-CH₂-O)₂₋₄-, sulfatoalcoxy en C₁-C₄, alcanoyle en C₂-C₄, (alcoxy en C₁-C₄)-carbonyle, alcanoyloxy en C₂-C₄, carboxy, cyano, halogéno, (alkyl en C₁-C₄)-amino, N,N-di-(alkyl en C₁-C₄)-amino ou sulfato,
ou bien dans laquelle R₁ représente un groupe alkyle en C₁-C₈ ou cycloalkyle en C₅-C₇ et ce groupe alkyle ou cycloalkyle peut porter les substituants indiqués, et R₂ représente un groupe alkyle en C₁-C₈ ou cycloalkyle en C₅-C₇ portant un ou des substituants sulfo.
